# EUROPÄISCHE PATENTSCHRIFT

(11) **EP 0 455 670 B1**
(45) Veröffentlichungstag und Bekanntmachung des Hinweises auf die Patenterteilung: **07.04.1993**
(21) Anmeldenummer: 90902111.5
(22) Anmeldetag: 26.01.1990
(51) Int. Cl.: B29C 47/02, B05D 1/26, E06B 3/30

(54) **VERFAHREN UND VORRICHTUNG ZUM HERSTELLEN VON PROFILEN**
PROCESS AND DEVICE FOR MANUFACTURING PROFILE SECTIONS
PROCEDE ET DISPOSITIF DE FABRICATION DE PROFILES

(30) Priorität: 27.01.1989 AT 157/89; 05.07.1989 AT 1642/89
(43) Veröffentlichungstag der Anmeldung: 13.11.1991
(73) Patentinhaber: C.A. GREINER & SÖHNE GESELLSCHAFT M.B.H., A-4550 Kremsmünster (AT)
(72) Erfinder: PÜRSTINGER, Franz, A-4540 Bad Hall (AT); DORNINGER, Frank, A-4563 Micheldorf (AT)
(74) Vertreter: Secklehner, Günter, Dr.
(86) Internationale Anmeldenummer: AT9000011
(87) Internationale Veröffentlichungsnummer: WO9008639

(56) Entgegenhaltungen:
- EP-A- 0 087 515
- EP-A- 0 179 445
- WO-A-88/03863
- DE-A- 2 265 035
- DE-A- 2 427 129
- DE-A- 2 737 046
- GB-A- 2 094 708
- NL-A- 7 211 692
- US-A- 3 758 370

## Beschreibung

Die Erfindung betrifft ein Verfahren zum Herstellen von aus Kunststoffextrudaten geformten formstabilen Profilen, insbesondere Fensterprofilen, mit darauf angeordneten Abdeckelemente wie Schutzschichten zum Abdecken von Profilteilen und/oder insbesondere einen höheren E-Modul aufweisenden, elastisch verformbaren Dichtungs- und/oder Dämpfungselementen,-b bei welchem das Profil extrudiert und im gleichen Arbeitsgang die Schutzschicht und/oder das Dicht- bzw. Dämpfungselement auf dieses Profil aufextrudiert wird, sowie ein nach diesem Verfahren hergestelltes Profil und eine Anlage zur Herstellung von Profilen gemäß diesem Verfahren.

Bei einer Herstellung von formstabilen Profilen, insbesondere Fensterprofilen, ist es erwünscht, bei der Herstellung der Profile auch gleichzeitig Schutzschichten und bzw. oder Vorrichtungen zum Abdichten, Dämpfen und bzw. oder Abdecken von Profilteilen bzw. die für die Abdichtung notwendigen Dichtungs- und bzw. oder Dämpfungsvorrichtungen anzuformen, sodaß nachträgliche Klebevorgänge und Nachbehandlungen der Profile eingespart werden können. Es wurde bereits versucht, derartige formstabile Hohlprofile mit den aus elastisch verformbaren Kunststoffen bestehenden Schutzschichten bzw. Vorrichtungen bzw. Dichtungs- und bzw. oder Dämpfungsvorrichtungen in einem Arbeitsgang durch Koextrusion herzustellen. Dies erfolgt dadurch, daß unmittelbar im Düsenbereich nach endgültiger Formgebung des formstabilen Profils über zusätzliche Düsenkanäle im Bereich der Düsenlippe, die mit einem weiteren Extruder für einen nach der Abkühlung weichen elastisch verformbaren Kunststoff verbunden sind, Schutzschichten bzw. Vorrichtungen bzw. die Dichtungs- und bzw. oder Dämpfungsvorrichtung aufextrudiert wurde. Das gleichzeitige Extrudieren der Schutzschichten bzw. Vorrichtungen bzw. Dichtungs- und bzw. oder Dämpfungsvorrichtungen erschwert jedoch die Kalibrierung der formstabilen Hohlprofile und erhöht daher den Aufwand für die Herstellung derartiger, mit Schutzschichten bzw. Vorrichtungen bzw. Dichtungs- und bzw. oder Dämpfungsvorrichtungen versehener formstabiler Hohlprofile.

Weiters ist es auch bereits bekannt - gemäß EP-OS 159 307 - auf ein rohrförmiges Hohlprofil, beispielsweise ein Kabelschutzrohr, einen elektrisch leitfähigen Draht oder ein Band aufzubringen. Dieser elektrisch leitfähige Draht bzw. das elektrisch leitfähige Band wird jedoch in einem eigenen Arbeitsvorgang hergestellt, um dann auf das Kabelschutzrohr aufgebracht zu werden. Dazu wurde auch bereits vorgeschlagen, daß dieser elektrisch leitfähige Draht bzw. das elektrisch leitfähige Band nach der Abkühlung des Hohlprofils bzw. Kabelschutzrohres auf eine Temperatur von 50°C, also in einen formstabilen Zustand in jenem Bereich, in welchem der Draht bzw. das Band am Kabelschutzrohrumfang befestigt werden soll, erhitzt wird. Gleichzeitig wird der aufzubringende Draht bzw. das aufzubringende Band durch eine Wärmequelle erhitzt und über eine gegebenenfalls beheizte Andrückvorrichtung gegen die oberfläche des in Extrusionsrichtung vorbeibewegten Kabelschutzrohres gedrückt. Im Anschluß an die Aufbringung des elektrisch leitfähigen Drahtes oder Bandes wird das gesamte Profil vom Raupenabzug erfaßt, der den Abtransport des extrudierten Kabelschutzrohres bewirkt. Die Verbindung zwischen dem elektrisch leitenden Draht bzw. Band und dem Kabelschutzrohr erfolgt durch ein starkes Erhitzen, beispielsweise durch Gasflammen oder Infrarotstrahl oder dgl., sodaß es bei einem Eindrücken mit hoher Kraft durch lokales Schmelzen des thermoplastischen Kunststoffmaterials des Hohlprofils bzw. Kabelschutzrohres in dieses einbettet und nach Abkühlung in die Rohrwandung einfrittet. Da in manchen Fällen die Wärmekapazität des Drahtes nicht ausreicht, um eine Einbettung bzw. Einfrittung des Drahtes in das Kabelschutzrohr in ausreichendem Maß zu erzielen, ist auch bereits vorgesehen worden, das Hohlprofil bzw. das Kabelschutzrohr in jenem Bereich, in welchem der Draht bzw. das Band eingearbeitet werden soll, zu erhitzen. Zudem ist es auch möglich, das Rohr bzw. das Band oder den Draht mit einem wärmeaktiven Kleber zu beschichten, sodaß zusätzlich zu dem Einbetten und Einschmelzen des Drahtes bzw. Bandes eine Verklebung zwischen dem Hohlprofil bzw. dem Kabelschutzrohr und dem Draht bzw. Band erfolgt. Ein ähnliches Verfahren ist auch aus der DE-OS 24 27 129 bereits bekannt.

Der vorliegenden Erfindung liegt die Aufgabe zugrunde, ein Verfahren zum Herstellen von aus Kunststoffextrudaten geformten formstabilen Profilen zu schaffen, mit welchem in einem Arbeitsgang und unter einwandfreier Kalibrierung des Hohlprofils eine Schutzschicht und bzw. oder Vorrichtung bzw. eine im ausgehärteten Zustand aus elastisch verformbaren Kunststoff bestehende Dichtungs- und bzw. oder Dämpfungsvorrichtung aufgebracht werden kann.

Diese Aufgabe der Erfindung wird dadurch gelöst, daß das Profil nach dem Verlassen der Düse kalibriert und soweit abgekühlt wird, daß es formstabil ist, worauf ein oberflächenbereich des Profils in einem Bereich, in dem die Schutzschicht oder das Dicht- und/oder Dämpfungselement aufgebracht wird, erhitzt und zumindest in einen teigigen Zustand versetzt wird, wonach die Kunststoffschmelze für die Schutzschicht oder das Dicht- bzw. Dämpfungselement auf den erhitzten Bereich aufextrudiert wird und danach das extrudierte Profil von einer Abzugsvorrichtung erfaßt wird. Der Vorteil dieser überraschend einfach erscheinenden Lösung liegt darin, daß die Aushärtung und Formgebung des formstabilen Hohlprofils und damit dessen Maßhaltigkeit, wie dies vor allem bei der Herstellung von Fensterprofilen äußerst wichtig ist, exakt eingehalten werden kann. Gleichzeitig wird aber trotzdem im gleichen Arbeitsgang das Aufbringen der Schutzschicht und bzw. oder Vorrichtung bzw. Dichtungs- und bzw. oder Dämpfungsvorrichtung aus einem unterschiedlichen Kunststoffmaterial mit einem höheren Elastizitätsmodul ermöglicht. Überraschend ist dabei, daß eine ausreichend gute Verbindung zwischen dem oberflächenbereich des Hohlprofils und der Dichtungs- und bzw. oder Dämpfungsvorrichtung erreicht werden kann, da durch die im Zuge der Kalibrierung entstehende Oberflächenrauhigkeit in Verbindung mit der Aufschmelzung des oberflächenbereiches und dem damit einhergehenden Verschweißen zwischen dem extrudierten plastifizierten Kunststoffmaterial für die Schutzschicht und bzw. oder Vorrichtung bzw. Dichtungs- und bzw. oder Dämpfungsvorrichtung eine stark beanspruchbare dauerhafte Verbindung in Art einer Verschweißung erzielt wird. Damit werden aber auch aufwendige Nachbehandlungen des Profils vor einem nachträglichen späteren Aufbringen einer Schutzschicht bzw. Vorrichtung oder einer derartigen Dichtungs- und bzw. oder Dämpfungsvorrichtung auf bereits fertiggestellte Profile durch ein Aufschleifen oder das Aufbringen einer Primärschicht eingespart.

Nach einer weiteren Ausführungsform ist es möglich, daß das Profil beim Austritt aus der Kalibrier- bzw. Kühlstrecke und/oder vor dem Eintritt in die Abzugsvorrichtung der Seite und/oder der Höhe nach geführt ist. Dadurch wird eine exakte Positionierung des Hohlprofils im Bereich der zusätzlichen Extruderdüse beim Aufbringen der Dichtungs- und bzw. oder Dämpfungsvorrichtung erreicht, sodaß auch eine exakte Abdichtung zwischen den einzelnen Teilen bei zusammengebauten, aus derartigen Hohlprofilen hergestellten, Fenstern erreicht werden kann.

Weiters ist es auch möglich, daß das Profil zumindest in jenem Bereich, in welchem die Schutzschicht und/oder das Dicht- bzw. Dämpfungselement aufgeschweißt wird, so stark erhitzt wird, daß es im oberflächenbereich aufschmilzt, wodurch das die Schutzschicht und bzw. oder Vorrichtung bzw. Dichtungs- und bzw. oder Dämpfungsvorrichtung bildende Kunststoffextrudat mit dem oberflächenbereich des formstabilen Profils verschweißt wird.

Von Vorteil ist es aber auch, wenn die Temperatur des Profils vor dem Eintritt in den Heizbereich ermittelt und in Abhängigkeit davon die Wärmemenge zum Erhitzen des Profils in jenem Bereich, in welchem die Schutzschicht und/oder das Dicht- bzw. Dämpfungselement aufgetragen wird, festgelegt wird, da dadurch ein zu tiefes Aufschmelzen des oberflächenbereiches des Profils verhindert und andererseits sichergestellt wird, daß ein so starkes Aufschmelzen stattfindet, daß es zu einem Verschweißen mit dem neu aufgebrachten Kunststoffmaterial kommt.

Nach weiteren Maßnahmen ist vorgesehen, daß die Temperatur des Kunststoffs in dem erhitzten oberflächenbereich ermittelt wird und insbesondere in Abhängigkeit davon die Wärmezufuhr zum Erhitzen des Profils bei einem Überschreiten einer vordefinierten Soll-Temperatur verringert und bei einem Unterschreiten erhöht wird, wodurch eine selbsttätige Überwachung und Regelung der zugeführten Wärmemenge und der erzielten Temperatur in den erhitzten oberflächenbereichen exakt gesteuert werden kann.

Es ist aber auch möglich, daß die Temperatur des Profils vor dem Heizbereich und die Temperatur des oberflächenbereiches des Profils im erhitzten Bereich nach der Wärmeeinwirkung erfaßt und in Abhängigkeit von den beiden ermittelten Temperaturen die zugeführte Wärmeenergie gesteuert wird, wodurch frühzeitig Temperaturveränderungen durch höhere oder niederere Temperaturen im oberflächenbereich des formstabilen Profils erkannt werden können und dadurch eine feinfühlige Temperaturregelung möglich wird.

Nach einer anderen Vorgangsweise ist vorgesehen, daß das kalibrierte Profil auf eine Temperatur von unter 70°C abgekühlt und danach ein oberflächenbereich des Profils in dem die Schutzschicht und/oder das Dicht- bzw. Dämpfungselement aufnehmenden Bereich auf zumindest 150°C erhitzt wird, worauf ein die Schutzschicht und/oder das Dicht- bzw. Dämpfungselement bildender Kunststoff aufextrudiert wird. Dadurch wird ein unerwünschter Spannungsaufbau im kalibrierten Profil auch während des Aufbringens der Dichtungs- und bzw. oder Dämpfungsvorrichtung verhindert. Darüberhinaus wird durch das vorhergehende Kalibrieren des formstabilen Profils eine gewisse Oberflächenrauhigkeit erhalten, die eine gute Verbindung zwischen der nachträglich aufgebrachten Dichtungs- und bzw. oder Dämpfungsvorrichtung und dem Profil ermöglicht.

Von Vorteil ist es aber auch, wenn die plastifizierte Kunststoffschmelze zur Bildung der Schutzschicht und/oder des Dicht- bzw. Dämpfungselementes mit dem erweichten Kunststoff des Oberflächenbereiches des Profils verschweißt wird, da dadurch eine innige formschlüßige Verbindung erreicht wird.

Weiters ist es aber auch möglich, daß das kalibrierte Profil bevorzugt vor und nach dem Aufbringen des die Schutzschicht und/oder des Dicht- bzw. Dämpfungselementes bildenden Kunststoffs der Seite und/oder der Höhe nach geführt ist, wodurch unmittelbar im Bereich des Aufbringens der Dichtungs- und bzw. oder Dämpfungsvorrichtung eine einwandfreie Führung und somit eine ausreichende Maßhaltigkeit der Dichtungs- und bzw. oder Dämpfungsvorrichtung erreicht wird.

Nach einer anderen Vorgangsweise ist vorgesehen, daß das Profil von der Abzugsvorrichtung in den der Schutzschicht und/oder dem Dicht- bzw. Dämpfungselement benachbarten Bereichen erfaßt wird, wodurch eine nachträgliche Störung bzw. unerwünschte Verformung der Dichtungs- und bzw. oder Dämpfungsvorrichtung verhindert wird.

Es ist aber auch möglich, daß die Schutzschicht und/oder das Dicht- bzw. Dämpfungselement im Bereich der Abzugsvorrichtung gekühlt wird, wodurch die Widerstandsfestigkeit der Dichtungs- und bzw. oder Dämpfungsvorrichtung gegen unerwünschte Verformungen noch verringert werden kann.

Weiters ist es auch möglich, daß die Schutzschicht zwischen zwei einander gegenüberliegenden Seitenkanten einer nutförmigen Vertiefung eingebracht und mit diesen verbunden wird, wodurch ein bündiges Abschließen bzw. Verschließen einer nutförmigen Vertiefung möglich ist und durch die Schweißbereiche zwischen den Stirnseiten der nutförmigen Vertiefung mit der Schutzschicht und die dabei entstehende Sprödigkeit in diesem Bereich das Entfernen der Schutzschicht erleichtert wird.

Nach einer anderen Weiterbildung ist vorgesehen, daß die Schutzschicht die beiden einander zugewandten Seitenkanten der nutförmigen Vertiefung im Bereich der Außenflächen überragt, wodurch ein Einsinken bzw. Durchhängen der nachträglich aufgebrachten Schutzschicht zusätzlich vermindert werden kann.

Vorteilhaft ist es aber auch, wenn das Abdeckelement zum Abdecken der nutförmigen Vertiefung diese überspannend auf die Außenflächen aufextrudiert wird, da dadurch auch eine höher beanspruchbare Abdeckung einer nutförmigen Vertiefung einfach erzielt werden kann.

Die Erfindung umfaßt weiters auch ein Profil aus formstabilem Kunststoff, insbesondere Fensterprofil, mit einer aus elastisch verformbarem Kunststoff bestehenden Schutzschicht und/oder einem Dicht- bzw. Dämpfungselement.

Dieses Profil ist dadurch gekennzeichnet, daß die Schutzschicht und/oder das Dicht- bzw. Dämpfungselement auf einen kalibrierten Oberflächenbereich des Profils auf- bzw. zwischen diesen eingeschweißt ist. Vorteilhaft ist bei diesem Profil, daß die Dichtungs- und bzw. oder Dämpfungsvorrichtung auf eine bereits maßhaltig kalibrierte oberfläche eines formstabilen Profils aufgebracht wird und daher beim Zusammenbau eines Fensters aus derartigen Profilen eine exakte Abdichtung und eine höhere Festigkeit des Hohlprofils erreicht wird. Durch die gleichmäßige Abkühlung des Hohlprofils anschließend an die Kalibrierung werden nämlich Spannungszonen verhindert, die dann entstehen können, wenn, wie beim Aufbringen der Dichtungs- und bzw. oder Dämpfungsvorrichtung gleichzeitig mit der Herstellung des Profils die Abkühlung aufgrund stark unterschiedlicher Wandstärken bzw. Volumsmassen unterschiedlich erfolgt.

Weiters ist es auch möglich, daß die Schutzschicht und/oder das Dicht- bzw. Dämpfungselement vollflächig auf dem Oberflächenbereich des Profils aufgeschweißt ist, wodurch eine innige großflächige Verbindung mit dem Profil sowie ein sicherer und widerstandsfähiger Halt am Profil erreicht wird.

Nach einer anderen Ausführungsform ist vorgesehen, daß die Schutzschicht und/oder Dicht- bzw. Dämpfungselement auf dem aufgeweichten oberflächenbereich des Profils aufextrudiert ist, wodurch eine noch bessere Verankerung der Dichtungs- und bzw. oder Dämpfungsvorrichtung erzielt werden kann.

Weiters ist es aber auch möglich, daß die Schutzschicht und/oder das Dicht- bzw. Dämpfungselement mehrere in Umfangsrichtung des Profils voneinander distanzierte und unabhängig voneinander angeordnete Schutzschichten und/oder Dicht- bzw. Dämpfungselemente aufweist. Eine derartige Ausführung und Herstellung mehrerer in Umfangsrichtung des Profils voneinander distanzierter Dichtungs- und bzw. oder Dämpfungsvorrichtungen ist nur dadurch möglich, daß das tragende Profil vorher abgekühlt wird und einen formstabilen Zustand erreicht, wodurch Verwindungen und Verspannungen des Profils vermieden werden können und außerdem mit einfach gestaltenen und damit betriebssicheren Werkzeugen das Auslangen gefunden werden kann.

Die Erfindung umfaßt weiters auch eine Anlage zur Herstellung von Profilen, insbesondere Fensterprofilen, aus formstabilem Kunststoff, mit auf diesen angeordneten Schutzschichten und/oder insbesondere einen höheren Elastizitätsmodul aufweisenden, elastisch verformbaren Dicht- bzw. Dämpfungselemente, mit einer Extrusionsvorrichtung, einer dieser nachgeschalteten Düse zur Formung eines gewünschten Profils, einer der Düse nachgeordneten Kalibrier- und Kühlvorrichtung für das Profil und einer dieser nachgeordneten Abzugsvorrichtung, insbesondere einem Raupenabzug.

Diese Anlage ist dadurch gekennzeichnet, daß zwischen der Kühl- und Kalibriervorrichtung und dem Raupenabzug zumindest eine weitere Düse angeordnet ist, an der das Profil anliegend vorbeigeführt ist und die mit einem Düsenspalt zur Herstellung einer als Schutzschicht dienenden Beschichtung und eines Dicht- bzw. Dämpfungselementes versehen ist, der mit einem Ausgang einer weiteren Extrusionsvorrichtung verbunden ist. Vorteilhaft ist hierbei, daß im Anschluß an die Kalibrier- und Kühlvorrichtung vor dem Raupenabzug eine weitere Abkühlung des Hohlprofils noch stattfinden kann, während dieser Bereich auch gleichzeitig genutzt wird, um die Dichtungs- und Dämpfungsvorrichtung aufzubringen, wobei bei Verwendung nur eines an der oberfläche des Profils anliegenden Düsenspaltes auch eine rasche Anpassung an unterschiedlich geformte Hohlprofile erfolgen kann.

Vorteilhaft ist es weiters, wenn in der Abzugsvorrichtung, insbesondere im Raupenabzug, Ausnehmungen zur Aufnahme der Schutzschicht und/oder des Dicht- bzw. Dämpfungselementes vorgesehen sind, da dadurch unerwünschte bleibende Verformungen der elastisch verformbaren Dichtungs- und bzw. oder Dämpfungsvorrichtung vermieden werden können, ohne daß spezielle Konstruktionen für die Abzugsvorrichtung notwendig sind.

Nach einer anderen Ausführungsvariante ist es aber auch möglich, daß die Schutzschicht und/oder das Dicht- bzw. Dämpfungselement auf geneigt oder versetzt zu Transportflächen der Raupen verlaufenden Flächen des Profils angeordnet sind, da dadurch mit den üblicherweise für den Abzug der Profile verwendeten Abzugsvorrichtungen ohne Änderungen das Auslangen gefunden werden kann.

Von Vorteil ist es weiters aber auch, wenn zwischen der Kühl- und Kalibriervorrichtung und der Düse der weiteren Extrusionsvorrichtung eine einem Oberflächenbereich zugeordnete Heizvorrichtung angeordnet ist, da dadurch eine gleichbleibende Temperatur des Oberflächenbereiches des Profils beim Aufextrudieren der Dichtungs- und bzw. oder Dämpfungsvorrichtung und somit eine exakt definierte gute Verbindung zwischen diesen erzielt werden kann.

Nach einer anderen Ausführungsform ist vorgesehen, daß der Oberflächenbereich eine Breite aufweist, die in etwa einer Breite der aufgeschweißten Schutzschicht und/oder dem Dicht- bzw. Dämpfungselement entspricht, wodurch die Oberflächengestaltung und Güte insbesondere auch aus Designgründen in den der Dichtungs- und bzw. oder Dämpfungsvorrichtung benachbarten Bereichen nicht nachteilig verändert wird.

Vorteilhaft ist es aber auch, wenn der Düse der weiteren Extrusionsvorrichtung eine Kalibriervorrichtung und gegebenenfalls eine Kühlvorrichtung nachgeordnet ist, da dadurch eine gezielte Abkühlung und eine exakte Ausformung der Dichtungs- und bzw. oder Dämpfungsvorrichtung sichergestellt werden kann.

Schließlich ist es aber auch von Vorteil, wenn die Düse zumindest zwei in Umfangrichtung des Profils voneinander getrennte und distanziert angeordnete Düsenspalte aufweist, da dadurch gleichzeitig mehrere Dichtungs- und bzw. oder Dämpfungsvorrichtungen über den Umfang des Profils verteilt, beispielsweise mehrere Dichtungslippen, hergestellt werden können.

Zum besseren Verständnis der Erfindung wird diese im nachfolgenden anhand der in den Zeichnungen dargestellten Ausführungsbeispiele näher erläutert.

Es zeigen:
- Fig. 1: eine erfindungsgemäß ausgebildete Anlage zur Herstellung des formstabilen Profils aus einem Kunststoffextrudat, in Seitenansicht und in vereinfachter schematischer Darstellung;
- Fig. 2: die Anlage nach Fig.1 in Draufsicht;
- Fig. 3: eine Stirnansicht der Anlage, im Schnitt, gemäß den Linien III-III in Fig.1;
- Fig. 4: eine Stirnansicht der Anlage, im Schnitt, gemäß den Linien IV-IV in Fig.1;
- Fig. 5: eine Stirnansicht der Anlage, im Schnitt, gemäß den Linien V-V in Fig.1;
- Fig. 6: die Anlage nach Fig.1 im Bereich der zwischen der Kühl- und Kalibriervorrichtung und dem Raupenabzug angeordneten Düse und der dieser vorgeordneten Heizvorrichtung, in Seitenansicht, geschnitten;
- Fig. 7: ein erfindungsgemäß ausgebildetes Profil in Stirnansicht;
- Fig. 8: eine andere Ausführung eines Profils mit daran angeformten Dichtungs- und bzw. oder Dämpfungsvorrichtungen in Stirnansicht;
- Fig. 9: ein anders gestaltetes Profil mit einer darauf angeordneten Dichtungs- und bzw. oder Dämpfungsvorrichtung in Stirnansicht;
- Fig. 10: eine andere erfindungsgemäß ausgebildete Anlage zur Herstellung des formstabilen Profils aus einem Kunststoffextrudat, in Seitenansicht und in vereinfachter schematischer Darstellung;
- Fig. 11: die Anlage nach Fig.10 in Draufsicht;
- Fig. 12: eine Stirnansicht der Anlage, im Schnitt, gemäß den Linien XII-XII in Fig.10;
- Fig. 13: eine Stirnansicht der Anlage, im Schnitt, gemäß den Linien XIII-XIII in Fig.10;
- Fig. 14: eine Stirnansicht der Anlage, im Schnitt, gemäß den Linien XIV-XIV in Fig.10;
- Fig. 15: die Anlage nach Fig.10 im Bereich der zwischen der Kühl- und Kalibriervorrichtung und dem Raupenabzug angeordneten Düse und der dieser vorgeordneten Heizvorrichtung, in Seitenansicht, geschnitten;
- Fig. 16: ein erfindungsgemäß ausgebildetes Profil in Stirnansicht;
- Fig. 17: eine andere Ausführungsvariante eines erfindungsgemäß ausgebildeten Profiles in Stirnansicht;
- Fig. 18: eine weitere Ausgestaltung eines erfindungsgemäß ausgebildeten Profiles in Stirnansicht;
- Fig. 19: eine Stirnansicht der Anlage im Schnitt, gemäß den Linien XIII-XIII in Fig.10 für das in Fig.17 und 18 dargestellte Profil;
- Fig. 20: die Anlage zur Herstellung einer Schutzschicht gemäß der Fig.18, im Schnitt, gemäß den Linien XX-XX in Fig.10, geschnitten;
- Fig. 21: eine Stirnansicht der Anlage im Schnitt, gemäß den Linien XIV-XIV in Fig.10;
- Fig. 22: ein Teil einer Anlage zur Herstellung des formstabilen Profils im Bereich zwischen der Kühl- und Kalibriervorrichtung und dem Raupenabzug und der Düse.

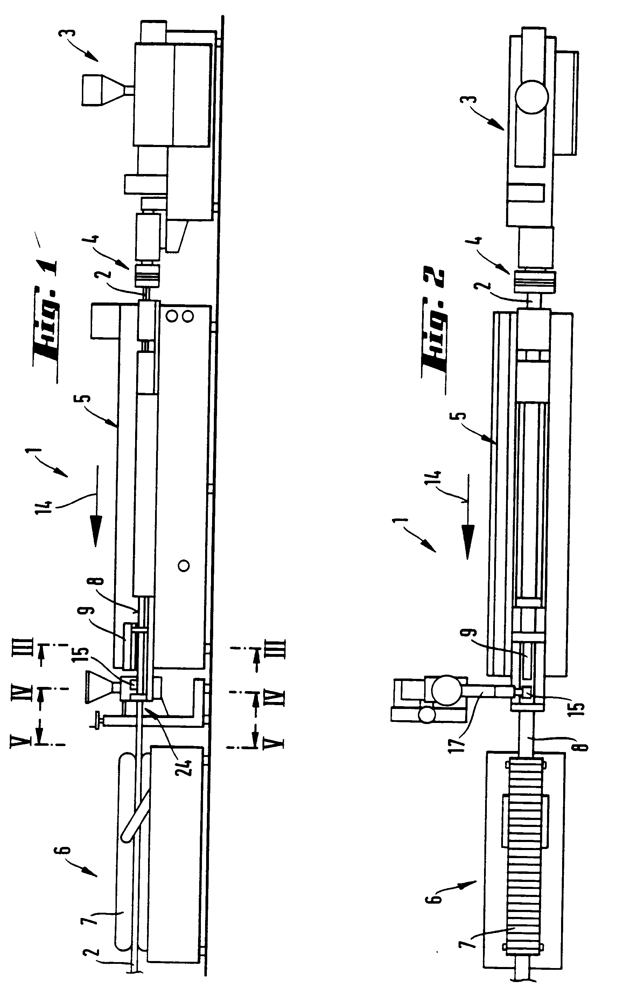

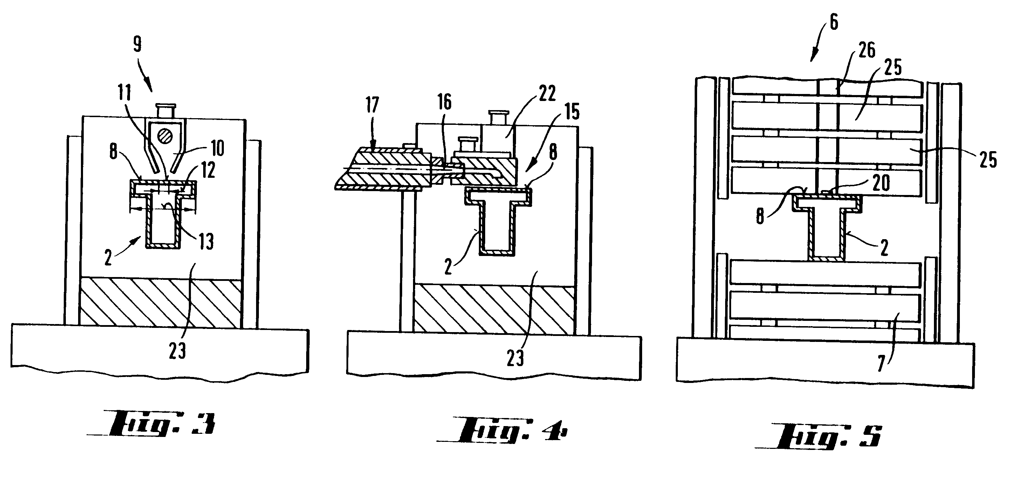

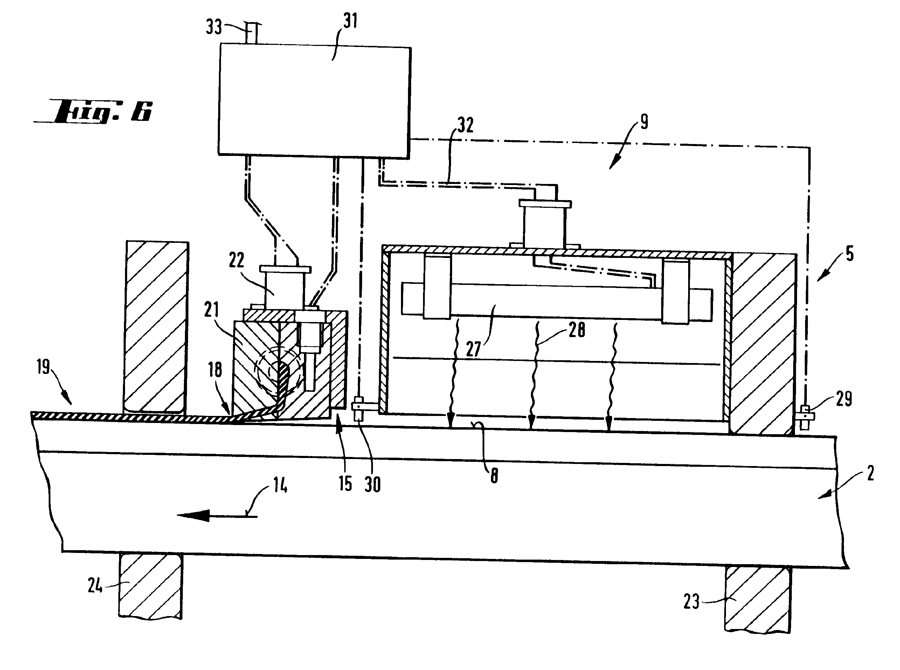

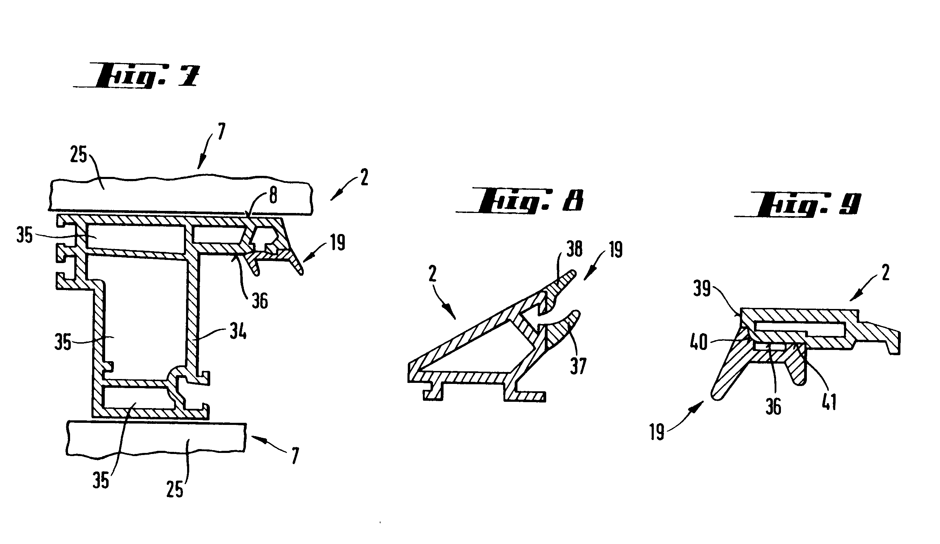

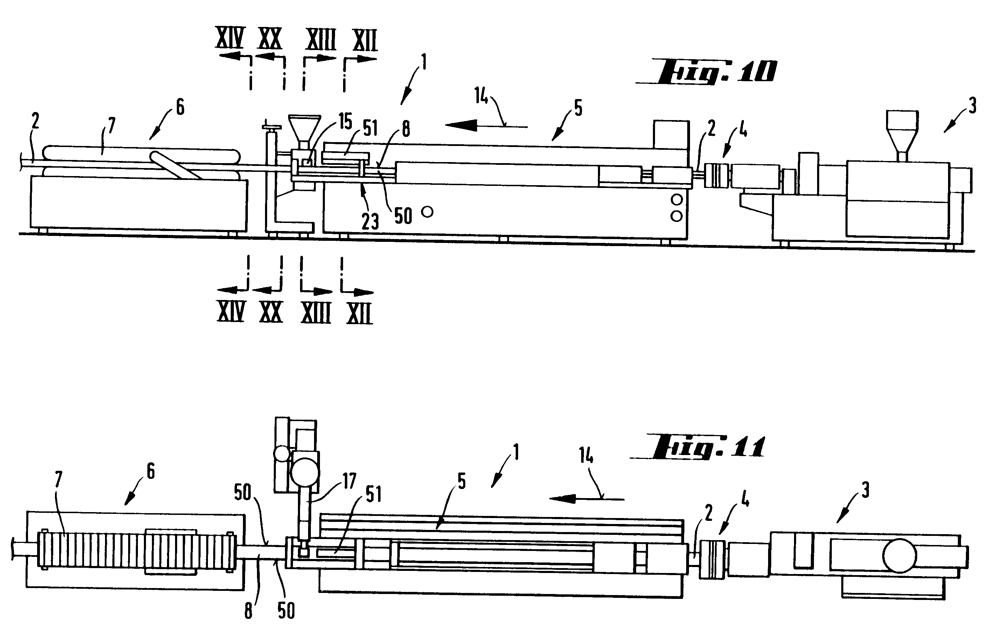

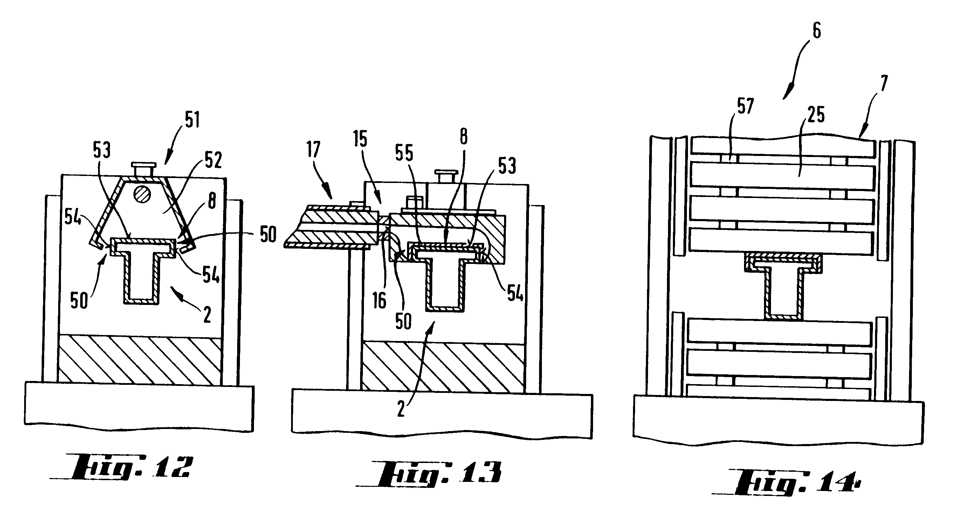

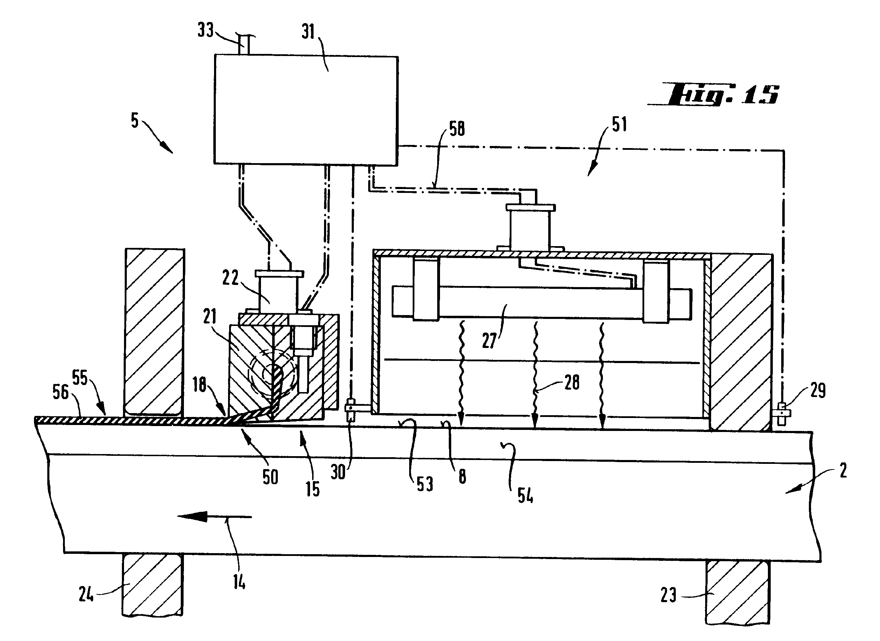

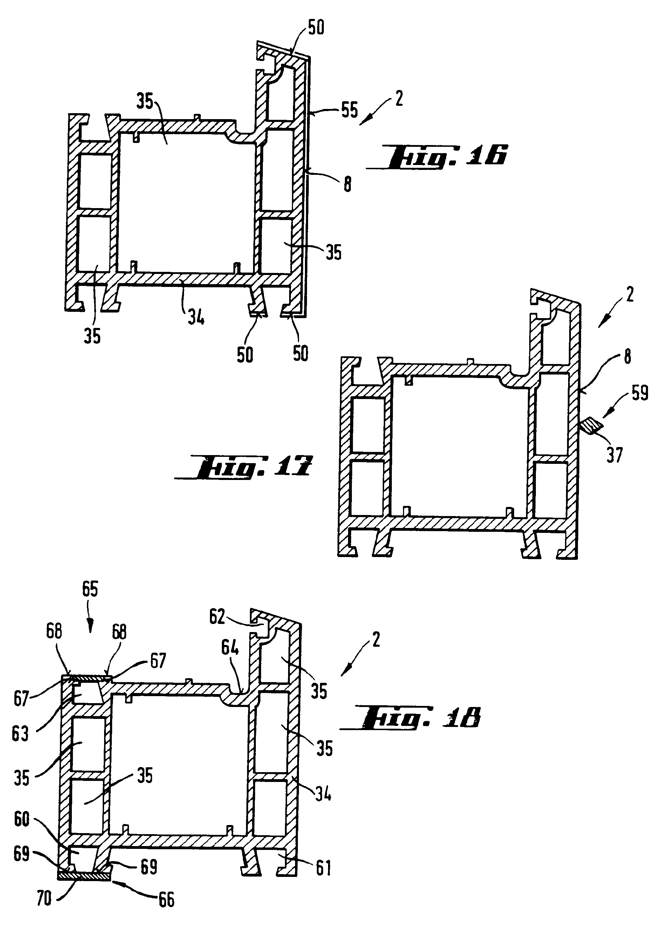

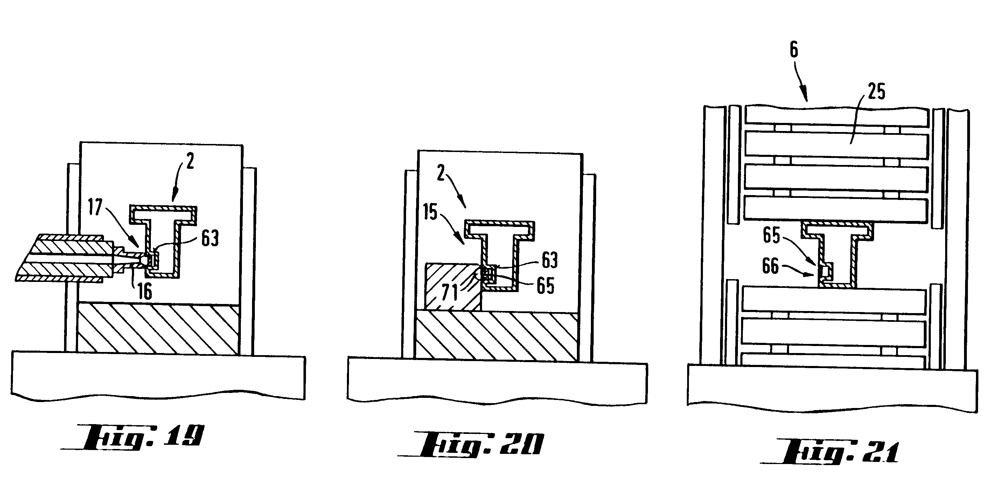

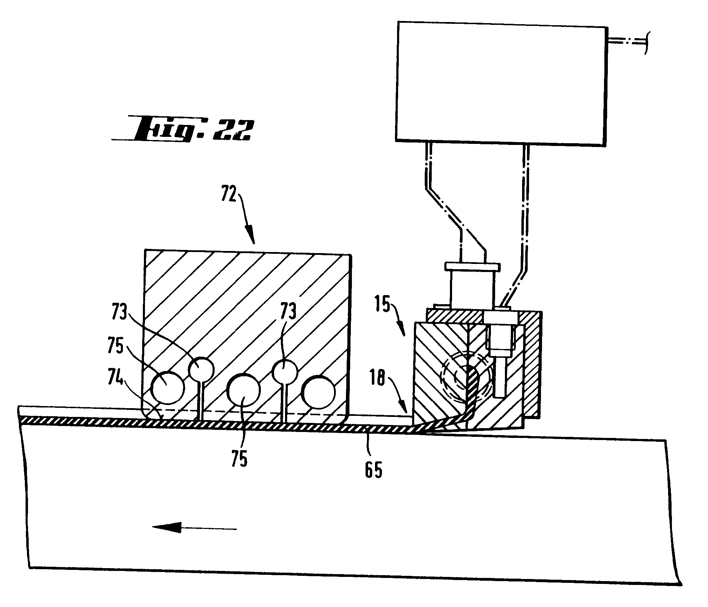

In den Fig.1 bis 6 ist eine Anlage 1 zum Herstellen von formstabilen Profilen 2 aus Kunststoffextrudaten, insbesondere Fensterprofilen, die zumeist als Hohlprofile ausgebildet sind, dargestellt. Diese Anlage umfaßt eine Extrusionsvorrichtung 3, eine dieser nachgeschaltete Düse 4 und eine Kühl- und Kalibriervorrichtung 5. Der Kühl- und Kalibriervorrichtung 5 ist eine Abzugsvorrichtung 6, beispielsweise ein Raupenabzug 7, nachgeordnet. Einer Seitenfläche 8 des Profils 2 ist eine Heizvorrichtung 9 zugeordnet. Diese Heizvorrichtung 9 kann, wie in Fig.3 gezeigt, durch ein Warmluftgebläse 10 gebildet sein, mit welchem eine Oberflächenschicht 11 mit einer Breite 12, die kleiner ist als eine Gesamtbreite 13 des Profils 2 soweit erhitzt wird, daß sie sich im teigigen bzw. plastifizierten Zustand befindet. Diese Oberflächenschicht 11 wird dazu in auf eine Temperatur von zumindest 150°C aufgewärmt. Das Profil 2, welches unmittelbar vor der Heizvorrichtung 9 aus der Kühl- und Kalibriervorrichtung 5 ausgetreten ist, weist zu diesem Zeitpunkt eine Temperatur auf, die unter 70°C liegt. Damit ist das Profil 2 soweit abgekühlt, daß es formstabil ist und kaum mehr Änderungen in den Außenabmessungen zu erwarten sind. Damit können auch einseitig auf das Profil einwirkende Druckkräfte bzw. in engen Bereichen aufgebrachte Wärmeenergie keine unerwünschten Spannungen im Profil 2 aufbauen bzw. das Profil nachträglich unerwünscht verformen.

Bevorzugt ist der Elastizitäts-Modul des Kunststoffes für die elastisch verformbaren Dichtungs- und bzw. oder Dämpfungsvorrichtungen 19 größer, als der entsprechende Elastizität-Modul des Profils 2. Damit kann ein dichter Abschluß zwischen aneinanderstoßenden harten Profilteilen und den weichen Dichtungs- und bzw. oder Dämpfungsvorrichtungen 19 erfolgen und es wird gleichzeitig auch sichergestellt, daß bei dieser Verformung der Dichtungs- und bzw. oder Dämpfungsvorrichtung 19 das Profil 2 stabil bleibt und nicht ebenfalls verformt wird. Als Material für derartige Dichtungs- und bzw. oder Dämpfungsvorrichtungen kommen vor allem Polyätherschäume, offen- bzw. geschlossenzellige Weich-PU-Schäume und Mischmaterialien aus Kunststoff und Gummi in Frage.

Der Heizvorrichtung 9 ist in Extrusionsrichtung - Pfeil 14 - eine weitere Düse 15 zugeordnet, die, wie besser aus den Fig.4 und 6 zu ersehen ist, an der Seitenfläche 8 des Profils zur Anlage kommt. Diese Düse 15 ist mit einem Ausgang 16 einer weiteren Extrusionsvorrichtung 17 gekuppelt und weist einen Düsenspalt 18 auf, der in seinem Querschnitt einem Querschnitt der Dichtungs- und bzw. oder Dämpfungsvorrichtung 19 entspricht. Diese Dichtungs- und bzw. oder Dämpfungsvorrichtung 19 ist im vorliegenden Ausführungsbeispiel durch eine elastisch verformbare Dichtleiste 20 gebildet. Sie ist beispielsweise aus einem auch nach dem Abkühlen elastisch verformbaren Kunststoff mit einem hohen Elastizitätsmodul gebildet, der durch entsprechende Druckkraft verformbar ist und somit einen dichten Abschluß zwischen aneinanderstoßenden Profilen bewirken kann.

Wie weiters den Darstellungen in Fig.4 und 6 zu entnehmen ist, wird ein Düsenkörper 21 der Düse 15 über einen Anpreßantrieb 22 gegen die Seitenfläche 8 des Profils 2 gepreßt. Das Profil 2 kann auch bei der durch den Anpreßantrieb 22 ausgeübten Kraft nicht ausweichen, da es in einem Kaliber 23 am Ausgang der Kühl- und Kalibriervorrichtung 5 sowie gegebenenfalls vor dem Einlauf in die nachgeordnete Abzugsvorrichtung 6 durch einen Kaliber 24 geführt bzw. abgestützt ist. Diese Führung und Abstützung in den Kalibern 23 und 24 erfolgt, wie besser aus Fig.3 zu ersehen ist, sowohl der Seite als auch der Höhe nach. Dazu kommt, daß das Profil 2 durch die mit der Abzugsvorrichtung 6 ausgeübte Zugkraft und die Kaliber 23 in der Kühl- und Kalibriervorrichtung 5 unter einer starken Zugspannung gehalten ist, sodaß es auch aus diesem Grund kaum entgegen der durch den Anpreßantrieb 22 aufgebrachten Druckkraft ausweichen kann.

Wie in Fig.5 weiters gezeigt ist, weisen die einzelnen Kettenglieder 25 Ausnehmungen 26 auf, die in ihrem Querschnitt im wesentlichen dem Querschnitt der Dichtleiste 20 der Dichtungs- und bzw. oder Dämpfungsvorrichtung 19 entsprechen. Damit wird verhindert, daß unmittelbar nach der Formgebung der Dichtungs- und bzw. oder Dämpfungsvorrichtung 19 diese durch den Anpreßdruck der Abzugsvorrichtung 6 bzw. der Raupenabzüge 7 zerstört bzw. unerwünscht verformt wird.

Wie weiters in Fig.6 gezeigt, kann die Heizvorrichtung 9 auch durch einen Heizstab 27 gebildet sein, beispielsweise einem Infrarotheizstab, der durch Gas oder beispielsweise auch durch Strom entsprechend erhitzt wird, um eine ausreichende Wärmeenergie, die schematisch durch Pfeile 28 angedeutet ist, auf die Oberflächenschicht 11 aufzubringen, sodaß diese auf eine Temperatur von über 150°C, bei der das Kunststoffmaterial aufschmilzt, gebracht werden kann.

Zur Überwachung des Temperaturverlaufes, insbesondere der Temperatur des Profils 2 vor dem Eintritt in die Heizvorrichtung 9, ist es möglich, einen Meßwertgeber 29 beispielsweise im Bereich des Kalibers 23 der Kühl- und Kalibriervorrichtung 5 vorzusehen. Gleichermaßen kann zwischen der Heizvorrichtung 9 und der Düse 15 ein Meßwertgeber 30 angeordnet sein, mit welchem die Temperatur im Bereich der Oberflächenschicht 11 festgestellt werden kann. Die Meßwertgeber 29 und 30 können mit einer Steuervorrichtung 31 verbunden sein, die über Versorgungs- und Steuerleitungen 32 mit der Heizvorrichtung 9 einerseits und mit einer Leitung 33 mit einem Energieversorgungssystem, beispielsweise einem Stromnetz und gegebenenfalls einem Gasnetz in Verbindung steht.

Die Regelung der Abgabe der durch Pfeile 28 angedeuteten Wärmeenergie auf die Oberflächenschicht 11 kann nunmehr in Abhängigkeit von dem Meßwert des Meßwertgebers 30, nämlich der Temperatur im Bereich der Oberflächenschicht 11 erfolgen. Es ist aber auch möglich, in den Regelungsvorgang die Meßwerte des Meßwertgebers 29 einzubeziehen, sodaß bei Temperaturschwankungen des in die Heizvorrichtung 9 einlaufenden Profils diese vollautomatisch berücksichtigt werden können, sodaß Schwankungen der Temperatur in der Oberflächenschicht 11 im Bereich der Düse 15 weitgehendst vermieden werden können und die Meßwerte des Meßwertgebers 30 lediglich eine Sicherheitsüberwachung darstellen.

Selbstverständlich ist es vorteilhaft, wenn die Seitenfläche 8 des Profils 2 nur im Bereich der Oberflächenschicht 11 mit einer Breite 12, auf die die Dichtungs- und bzw. oder Dämpfungsvorrichtung aufgebracht wird, erhitzt wird, da damit eine nachteilige Beeinflußung der Oberflächenqualität in den der Dichtungs- und bzw. oder Dämpfungsvorrichtung 19 benachbarten Bereichen ausgeschaltet ist. Ist es jedoch erwünscht bzw. für die Qualität des Profils 2 nicht störend, so kann auch die gesamte Seitenfläche entsprechend aufgeheizt werden.

In Fig.7 ist eine Ausführungsform eines Profils 2, welches gemäß dem erfindungsgemäßen Verfahren und mit einer erfindungsgemäßen Anlage hergestellt werden kann, dargestellt. Wie aus dieser Zeichnung ersichtlich, handelt es sich um ein Hohlprofil 34 beispielsweise für ein Fenster, welches mit mehreren Kammern 35 versehen ist. Außerdem sind im Bereich der Oberflächen unterschiedliche Vorsprünge und Rastleisten zum Zusammenschnappen mit anderen Profilen bzw. zur besseren Verbindung vorgesehen. Weiters sind schematisch die Kettenglieder 25 der Raupenabzüge 7 dargestellt, mit welchen das Profil 2 aus der Kühl- und Kalibriervorrichtung abgezogen wird.

Aus dieser Darstellung ist nun weiters ersichtlich, daß die nach dem erfindungsgemäßen Verfahren aufgebrachte Dichtungs- und bzw. oder Dämpfungsvorrichtung 19 auf einer Seitenfläche 36 angeordnet ist, die von der dem Raupenabzug 7 zugewandten Seitenfläche 8 abgewandt ist. Dadurch wird der Abzug des Profils 2 mit den Raupenabzügen 7 nicht behindert und andererseits die Dichtungs- und bzw. oder Dämpfungsvorrichtung 19 durch die unmittelbar nach der Düse 15 auf das Profil 2 einwirkenden Raupenabzüge 7 nicht beschädigt und kann in der hergestellten Form langsam abkühlen.

Eine weitere Ausführungsvariante eines Profils 2, welches entsprechend dem erfindungsgemäßen Verfahren mit der erfindungsgemäßen in den Fig.1 bis 6 gezeigten Anlage hergestellt werden kann, ist in Fig.8 gezeigt. Aus dieser Darstellung ist ersichtlich, daß die Dichtungs- und bzw. oder Dämpfungsvorrichtung 19 zwei über den Querschnitt verteilt und voneinander distanziert angeordnete Dichtlippen 37,38 aufweisen kann. Diese Dichtlippen 37,38 können in aufeinanderfolgenden Arbeitsvorgängen einzeln hergestellt oder in der Düse 15 gleichzeitig hergestellt werden. Das Material zur Herstellung der Dichtungs- und bzw. oder Dämpfungsvorrichtung 19 wird dabei von der der Düse 15 zugeordneten Extrusionsvorrichtung 17 zugeführt.

Bei der in Fig.9 dargestellten Ausführungsform eines Profils 2 ist gezeigt, daß die Dichtungs- und bzw. oder Dämpfungsvorrichtung 19 nicht vollflächig mit der Seitenfläche 36 bzw. gegebenenfalls sogar einer weiteren Seitenfläche 39 verbunden sein muß. Es ist ohne weiteres möglich, daß die Dichtungs- und bzw. oder Dämpfungsvorrichtung 19 nur über zwei voneinander getrennte Stützbereiche 40,41 mit dem Profil 2 verschweißt ist.

Bei der Herstellung eines erfindungsgemäßen Profils wird nun derart vorgegangen, daß ein Rohkunststoff in granulierter Form der Extrusionsvorrichtung 3 zugeführt und in dieser durch Druck- und Hitzeeinwirkung plastifiziert und durchmischt wird. Das derart durchmischte und plastifizierte Kunststoffgranulat wird als Kunststoffschmelze einer Düse 4 zugeführt, in der die beispielsweise in den Fig.7 bis 9 gezeigten Querschnittsformen des Profils 2 hergestellt werden. Unmittelbar nach dem Austritt des Profils 2 aus der Düse 4 wird dieses durch mehrere Kammern hindurchgeführt, um eine ausreichende Maßhaltigkeit des Profils 2 zu gewährleisten. Gleichzeitig bzw. aufeinanderfolgend wird das Profil 2 abgekühlt. Die Abkühlung wird so berechnet, daß das Profil 2 beim Austritt aus der Kühl- und Kalibriervorrichtung 5 beispielsweise eine Temperatur von unter 70°C, bevorzugt 50°C, aufweist. Unmittelbar anschließend an den Austritt des Profils 2 aus der Kühl- und Kalibriervorrichtung wird die Oberflächenschicht 11 durch die Heizvorrichtung 9 soweit erhitzt, daß die oberfläche dieser Oberflächenschicht 11 aufschmilzt. Dazu wird diese Oberflächenschicht 11 auf eine Temperatur von über 150°C, bevorzugt zwischen 150°C und 180°C, erhitzt. Die genaue Temperatur auf die dieser Kunststoff zu erhitzen ist, ist nicht nur von den unterschiedlich eingesetzten Kunststoffmaterialien, sondern auch von den in diesen Kunststoffmaterialien enthaltenen Zusätzen abhängig, sodaß eine exakte Verfahrenstemperatur im vorhinein nicht angegeben werden kann. Wesentlich ist jedoch, daß das Kunststoffmaterial im Bereich dieser Oberflächenschicht soweit erhitzt wird, daß es aufschmilzt und sich somit in Art eines Schweißvorganges mit dem unmittelbar an die Heizvorrichtung 9 mittels der Düse 15 aufgebrachten Kunststoff zur Herstellung der Dichtungs- und bzw. oder der Dämpfungsvorrichtung 19 verbinden, insbesondere verschweißen kann. Im Anschluß an die Düse 15, mit der über einen Düsenspalt 18 die Dichtungs- und bzw. oder Dämpfungsvorrichtung 19 hergestellt wird, ist eine Abzugsvorrichtung 6 vorgesehen, die bevorzugt durch Raupenabzüge 7 gebildet ist. Um eine exakte Maßhaltigkeit der Dichtungs- und bzw. oder Dämpfungsvorrichtung 19 sicherzustellen, kann das Profil 2 zwischen der Düse 15 und dem Kaliber 24, wie am besten aus Fig.6 zu ersehen ist, der Höhe und der Seite nach geführt sein.

Um eine Zerstörung bzw. unerwünschte Verformung der Dichtungs- und bzw. oder Dämpfungsvorrichtung, falls diese auf der Distanz zwischen der Düse 15 und der Abzugsvorrichtung 6 nicht entsprechend abkühlen, zu vermeiden, ist es vorteilhaft, wenn die Dichtungs- und bzw. oder Dämpfungsvorrichtungen an Seitenflächen angeordnet sind, an welchen die Raupenabzüge 7 nicht zur Anlage kommen.

Für den Fall, daß die Dichtungs- und bzw. oder Dämpfungsvorrichtungen 19 jedoch auf dieser Seitenfläche angeordnet sein müssen, so ist es vorteilhaft, wenn die Kettenglieder der Raupenabzüge 7 mit Ausnehmungen 26 versehen sind, um eine unerwünschte Verformung der Dichtungs- und bzw. oder Dämpfungsvorrichtung 19 zu verhindern.

Selbstverständlich kann das Profil und bzw. oder die Vorrichtung eine vom Verfahren unabhängige eigenständige erfindungsgemäße Lösung bilden.

In den Fig.10 bis 15 ist eine Anlage 1 zum Herstellen von formstabilen Profilen 2 aus Kunststoffextrudaten, insbesondere Fensterprofilen, die zumeist als Hohlprofile ausgebildet sind, dargestellt. Diese Anlage umfaßt eine Extrusionsvorrichtung 3, eine dieser nachgeschaltete Düse 4 und eine Kühl- und Kalibriervorrichtung 5. Der Kühl- und Kalibriervorrichtung 5 ist eine Abzugsvorrichtung 6, beispielsweise ein Raupenabzug 7, nachgeordnet. Einer Seitenfläche 8 mit daran anschließenden Seitenkanten 50 des Profils 2 ist eine Heizvorrichtung 51 zugeordnet. Diese Heizvorrichtung 51 kann, wie in Fig.12 gezeigt, durch ein Warmluftgebläse 52 gebildet sein, mit welchem eine in Fig.15 schematisch angedeutete Oberflächenschicht 53 der Seitenfläche 8 und Oberflächenschichten 54 der Seitenkanten 50 soweit erhitzt werden, daß sie sich im teigigen bzw. plastifizierten Zustand befindet. Diese Oberflächenschichten 53,54 werden dazu auf eine Temperatur von zumindest 150°C aufgewärmt. Das Profil 2, welches unmittelbar vor der Heizvorrichtung 51 aus der Kühl- und Kalibriervorrichtung 5 ausgetreten ist, weist zu diesem Zeitpunkt eine Temperatur auf, die unter 70°C liegt. Damit ist das Profil 2 soweit abgekühlt, daß es formstabil ist und kaum mehr Änderungen in den Außenabmessungen zu erwarten sind. Damit kann auch eine einseitig auf das Profil einwirkende Druckkraft bzw. eine in engen Bereichen aufgebrachte Wärmeenergie keine unerwünschten Spannungen im Profil 2 aufbauen bzw. das Profil nachträglich unerwünscht verformen.

Der Heizvorrichtung 51 ist in Extrusionsrichtung - Pfeil 14 - eine weitere Düse 15 zugeordnet, die, wie besser aus den Fig.13 und 15 zu ersehen ist, an den Seitenflächen 8 und den Seitenkanten 50 des Profils zur Anlage kommt. Diese Düse 15 ist mit einem Ausgang 16 einer weiteren Extrusionsvorrichtung 17 gekuppelt und weist einen Düsenspalt 18 auf, der in seinem Querschnitt einem Querschnitt des Profils 2 im Bereich der Seitenfläche 8 und der Seitenkanten 50 entspricht. Je nach der Öffnungsweite des Düsenspaltes zwischen der Seitenfläche 8 und den Seitenkanten 50 des Profils und den Düsenlippen kann nun eine mehr oder weniger starke Schutzschicht 55 auf die Seitenfläche 8 und die Seitenkanten 50 aufgebracht werden. Diese Schutzschicht 55 kann beispielsweise dazu dienen, um die Abriebfestigkeit der Profiloberfläche oder die Widerstandsfestigkeit gegen UV-Bestrahlung oder die Farbechtheit sicherzustellen. Als Materialien 56 für diese Schutzschicht 55 können dem Grundmaterial des Profils 2 entsprechende Polyvinylchloride (PVC) oder auch hochwertiges Polyvinylchlorid verwendet werden. Die hochwertigen Polyvinylchloride dienen vor allem der Veredelung von Teilen eines Profils um die Witterungsbeständigkeit, Farbechtheit und vor allem die Standfestigkeit gegenüber UV-Bestrahlung zu erhöhen. Besonders hohe Schutzwirkungen werden erzielt, wenn diese Schutzschicht 55 durch ein Acryl gebildet wird. Es ist aber ebenso möglich, jede Art von Thermoplasten zum Aufbringen von Schutzschichten bzw. Vorrichtungen zum Abdichten, Dämpfen bzw. Abdecken einzusetzen.

Wie weiters den Darstellungen in Fig.13 und 15 zu entnehmen ist, wird ein Düsenkörper 21 der Düse 15 über einen Anpreßantrieb 22 gegen die Seitenfläche 8 und die Seitenkanten 50 des Profils 2 gepreßt. Das Profil 2 kann auch bei der durch den Anpreßantrieb 22 ausgeübten Kraft nicht ausweichen, da es in einem Kaliber 23 am Ausgang der Kühl- und Kalibriervorrichtung 5 sowie gegebenenfalls vor dem Einlauf in die nachgeordnete Abzugsvorrichtung 6 durch einen Kaliber 24 geführt bzw. abgestützt ist. Diese Führung und Abstützung in den Kalibern 23 und 24 erfolgt, wie besser aus Fig.12 zu ersehen ist, sowohl der Seite als auch der Höhe nach. Dazu kommt, daß das Profil 2 durch die mit der Abzugsvorrichtung 6 ausgeübte Zugkraft und die Kaliber 23 in der Kühl- und Kalibriervorrichtung 5 unter einer starken Zugspannung gehalten ist, sodaß es auch aus diesem Grund kaum entgegen der durch den Anpreßantrieb 22 aufgebrachten Druckkraft ausweichen kann.

Wie in Fig.14 weiters gezeigt ist, weisen die Abzugsvorrichtungen 6 bzw. die Raupenabzüge 7 einzelne Kettenglieder 25 auf, die über Verbindungsorgane 57 miteinander verbunden sind. Da bei dem Aufbringen von Beschichtungen bzw. Schutzschichten 55 mit geringer Dicke diese rasch abkühlen und erhärten ist es in diesem Fall möglich unmittelbar an das Aufbringen der Schutzschichten 55 diese mit den Kettengliedern 25 der Raupenabzüge 7 zu belasten, ohne daß Beschädigungen der Schutzschicht 55 befürchtet werden müssen.

Wie weiters in Fig.15 gezeigt, kann die Heizvorrichtung 51 auch durch einen Heizstab 27 gebildet sein, beispielsweise einen Infrarotheizstab, der durch Gas oder beispielsweise auch durch Strom entsprechend erhitzt wird, um eine ausreichende Wärmeenergie, die schematisch durch Pfeile 28 angedeutet ist, auf die Oberflächenschichten 53,54 aufzubringen, sodaß diese auf eine Temperatur von über 150°C, bei der das Kunststoffmaterial aufschmilzt, gebracht werden kann.

Zur Überwachung des Temperaturverlaufes, insbesondere der Temperatur des Profils 2 vor dem Eintritt in die Heizvorrichtung 51, ist es möglich, einen Meßwertgeber 29 beispielsweise im Bereich des Kalibers 23 der Kühl- und Kalibriervorrichtung 5 vorzusehen. Gleichermaßen kann zwischen der Heizvorrichtung 51 und der Düse 15 ein Meßwertgeber 30 angeordnet sein, mit welchem die Temperatur im Bereich der Oberflächenschichten 53,54 festgestellt werden kann. Die Meßwertgeber 29 und 30 können mit einer Steuervorrichtung 31 verbunden sein, die über Versorgungs- und Steuerleitungen 58 mit der Heizvorrichtung 51 einerseits und mit einer Leitung 33 mit einem Energieversorgungssystem, beispielsweise einem Stromnetz und gegebenenfalls einem Gasnetz in Verbindung steht.

Die Regelung der Abgabe der durch Pfeile 28 angedeuteten Wärmeenergie auf die Oberflächenschichten 53,54 kann nunmehr in Abhängigkeit von dem Meßwert des Meßwertgebers 30, nämlich der Temperatur im Bereich der Oberflächenschichten 53,54 erfolgen. Es ist aber auch möglich, in den Regelungsvorgang die Meßwerte des Meßwertgebers 29 einzubeziehen, sodaß bei Temperaturschwankungen des in die Heizvorrichtung 51 einlaufenden Profils diese vollautomatisch berücksichtigt werden können, sodaß Schwankungen der Temperatur in den Oberflächenschichten 53,54 im Bereich der Düse 15 weitgehendst vermieden werden können und die Meßwerte des Meßwertgebers 30 lediglich eine Sicherheitsüberwachung darstellen.

Selbstverständlich ist es vorteilhaft, wenn die Seitenfläche 8 und die Seitenkanten 50 des Profils 2 nur im Bereich der Oberflächenschicht 53,54 auf die Schutzschicht 55 bzw. die Beschichtung aufgebracht wird, erhitzt wird, da damit eine nachteilige Beeinflußung der Oberflächenqualität in den der Schutzschicht 55 benachbarten Bereichen ausgeschaltet ist. Ist es jedoch erwünscht bzw. für die Qualität des Profils 2 nicht störend, so kann auch die gesamte Oberfläche des Profils 2 entsprechend aufgeheizt werden.

In Fig.16 ist eine Ausführungsform eines Profils 2, welches gemäß dem erfindungsgemäßen Verfahren und mit einer erfindungsgemäßen Anlage hergestellt werden kann, dargestellt. Wie aus dieser Zeichnung ersichtlich, handelt es sich um ein Hohlprofil 34 beispielsweise für ein Fenster, welches mit mehreren Kammern 35 versehen ist. Außerdem sind im Bereich der Oberflächen unterschiedliche Vorsprünge und Rastleisten zum Zusammenschnappen mit anderen Profilen bzw. zur besseren Verbindung vorgesehen.

Aus dieser Darstellung ist nun weiters ersichtlich, daß die nach dem erfindungsgemäßen Verfahren aufgebrachte Schutzschicht 55 auf der Seitenfläche 8 und den Seitenkanten 50 angeordnet ist.

Eine weitere Ausführungsvariante eines Profils 2, welches entsprechend dem erfindungsgemäßen Verfahren mit der erfindungsgemäßen in den Fig.10 bis 15 gezeigten Anlage hergestellt werden kann, ist in Fig.17 gezeigt. Aus dieser Darstellung ist ersichtlich, daß eine Vorrichtung 59 zum Abdichten bzw. Dämpfen z.B. eine Dichtlippe 37 auf der Seitenfläche 8 eines Profils 2 angeordnet sein kann. Diese Dichtlippen 37 können in aufeinanderfolgenden Arbeitsvorgängen unabhängig oder gleichzeitig mit einer Schutzschicht 55 hergestellt werden. Das Material zur Herstellung der Vorrichtung 59 wird dabei von der einer weiteren Düse 15 zugeordneten Extrusionsvorrichtung 17 zugeführt.

In Fig.18 ist ein Profil 2 gezeigt, welches als Hohlprofil 34 ausgebildet ist und aus mehreren Kammern 35 zusammengesetzt ist. Außerdem weist dieses Hohlprofil 34 am Außenumfang mehrere nutenförmige Vertiefungen 60,61,62,63 und 64 auf. Je nach dem mit dem einzelnen Profil 2 hergestellten Fenstertyp ist es nunmehr erforderlich, daß alle oder nur einzelne dieser nutförmigen Vertiefungen beispielsweise zum Einsetzen von Dichtlippen oder Glasplatten benötigt werden. Befinden sich diese nutförmigen Vertiefungen 60 bis 64, die in jenem Fall also nicht benötigt werden, im Außenbereich des Fensters, so bilden sie immer wieder Grund für Beanstandungen, da sie sehr stark und leicht verschmutzen und nur sehr schwer zu reinigen sind.

Andererseits ist es jedoch zur exakten Herstellung des Außenumfangs der nutförmigen Vertiefungen 60 bis 64 notwendig, daß diese auch in jenen Bereichen einwandfrei kalibriert werden, um eine ausreichende Maßhaltigkeit zum Einsetzen von Dichtvorrichtungen bzw. Glasscheiben und dgl. zu erzielen.

Mit dem erfindungsgemäßen Verfahren und der erfindungsgemäßen Vorrichtung ist es nunmehr erstmals möglich, nach dem Kalibrieren und Abkühlen des Profils 2 derartige nutförmige Vertiefungen 60 bis 64, wie beispielsweise im Bereich der Vertiefungen 63 und 60 gezeigt, durch eine Schutzschicht 65 bzw. eine Abdeckvorrichtung 66 zu verschließen.

Während die Schutzschicht 65 zwischen einander gegenüberliegenden Seitenkanten 67 der nutförmigen Vertiefung 63 eingebracht wird und gegebenenfalls nur eine dünne hautförmige Überdeckung bis in den Bereich der Außenflächen 68 aufweist, wird die Abdeckvorrichtung 66 durch eine auf Außenflächen 69 aufextrudierte Kunststoffschicht 70 verschlossen.

Die Herstellung der Schutzschicht 65 bzw. der Abdeckvorrichtung 66 zum Abdecken der nutförmigen Vertiefungen 63 erfolgt nunmehr entsprechend den bereits vorstehend beschriebenen Verfahren zum Aufbringen einer Schutzschicht 55. Unabhängig davon wird jedoch die Herstellung der Schutzschicht 65 zum Verschließen der nutförmigen Vertiefung 63 und die dazu notwendigen Werkzeuge und Vorrichtungen in den nachfolgenden Fig.19 bis 22 beschrieben.

Der Gesamtaufbau der zur Herstellung derartiger Schutzschichten 65 bzw. Abdeckvorrichtungen 66 dienenden Anlage 1 entspricht der in den Fig.10 und 11 dargestellten Anlage, wobei die in Fig.19 gezeigte Stirnansicht der Schnittebene XIII-XIII in Fig.10 und die in Fig.21 gezeigte Stirnansicht der Darstellung in der Schnittebene XIV-XIV in Fig.10 entspricht.

Die Stirnansicht in Fig.20 entspricht der in Fig.10 eingetragenen Schnittebene XX-XX.

In Fig.19 ist gezeigt, daß sich ein Ausgang 16 der Extrusionsvorrichtung 17 in den Bereich der Vertiefung 63 des Profils 2 hineinerstreckt. Die in Förderrichtung - Pfeil 14 - verlaufenden Formkanäle, insbesondere der aus Fig.20 ersichtliche Verteilungskanal 71 bewirkt nun den Aufbau eines Schmelzestroms, der in seinem Querschnitt der Schutzschicht 65 in Fig.18 entspricht. Während des Aufbringens dieser Schutzschicht 65 ist der Hohlraum bzw. die nutförmige Vertiefung 63 durch einen Teil des Formwerkzeuges verschlossen. Verläßt nun die Schutzschicht 65 die Düse 15, so besteht während der weiteren Abkühlung derselben die Gefahr, daß diese Schicht vor einer ausreichenden Verfestigung in Richtung der nutförmigen Vertiefung 63 einsinkt bzw. durchhängt. Dadurch würde die Oberflächengüte bzw. das Aussehen des Profils nachteilig verändert werden.

Wie nun besser aus Fig.22 zu ersehen ist, ist der Düse 15 bzw. dem Düsenspalt 18 eine Kalibriervorrichtung 72 nachgeordnet, die eine Mehrzahl von Vakuumkanälen 73 aufweist, mit welchen die Schutzschicht 65 an eine Führungsfläche 74 der Kalibriervorrichtung 72 angesaugt wird. Gleichzeitig ist die Kalibriervorrichtung 72 mit Kühlkanälen 75 versehen, durch die ein Kühlmedium, beispielsweise Kaltwasser hindurchgeführt wird, um eine rasche Abkühlung der Schutzschicht 65 zu ermöglichen. Durch die Kalibriervorrichtung 72 und die darin angeordnete Kühlvorrichtung ist eine so ausreichende Wärmemenge abzuführen, daß die Schutzschicht 65 soweit abgekühlt ist, daß nach dem Austritt aus der Kalibriervorrichtung 72 eine Oberflächenveränderung nicht mehr erfolgen kann.

Um jedoch zu vermeiden, daß die zwar schon erstarrte Schutzschicht 65, aber doch noch nicht voll ausgehärtete Schutzschicht 65, durch Kettenglieder 25 der Abzugsvorrichtung 6 nachteilig beeinflußt werden, wird wie insbesondere aus Fig.21 zu ersehen ist, das Profil 2 so gefördert, daß in jener Seitenfläche, in deren Bereich die Schutzschicht 65 bzw. die Abdeckvorrichtung 66 angebracht wird, keine Kettenglieder 25 der Abzugvorrichtung 6 zur Anlage kommen.

Selbstverständlich ist es auch möglich, über eine zusätzliche Extrusionsvorrichtung 17 mehrere Formwerkzeuge gleichzeitig zu versorgen, sodaß in einem Arbeitsgang mehrere solche Schutzschichten 65 bzw. Abdeckvorrichtungen 66 aufgebracht werden können.

Ein Vorteil des nachträglichen Aufbringens dieser Schutzschicht 65 bzw. Abdeckvorrichtung 66 liegt darin, daß bei der vorhergehenden Herstellung des Profils 2 die Profilflanken der Vertiefungen 60 bis 64 exakt und maßhaltig hergestellt werden können, während im Fall, daß diese Schichten nicht benötigt werden, durch die doch geringere Haftung zwischen dem Material aus dem die Schutzschichten 65 und Abdeckvorrichtungen 66 mit dem Grundmaterial des Profils 2 eingehen diese leicht herausgebrochen bzw. entfernt werden können.

Bei der Herstellung eines erfindungsgemäßen Profils 2 wird nun derart vorgegangen, daß ein Rohkunststoff in granulierter Form der Extrusionsvorrichtung 3 zugeführt und in dieser durch Druck- und Hitzeeinwirkung plastifiziert und durchmischt wird. Das derart durchmischte und plastifizierte Kunststoffgranulat wird als Kunststoffschmelze einer Düse 4 zugeführt, in der die beispielsweise in den Fig.16 bis 18 gezeigten Querschnittsformen des Profils 2 hergestellt werden. Unmittelbar nach dem Austritt des Profils 2 aus der Düse 4 wird dieses durch mehrere Kammern hindurchgeführt, um eine ausreichende Maßhaltigkeit des Profils 2 zu gewährleisten. Gleichzeitig bzw. aufeinanderfolgend wird das Profil 2 abgekühlt. Die Abkühlung wird so berechnet, daß das Profil 2 beim Austritt aus der Kühl- und Kalibriervorrichtung 5 beispielsweise eine Temperatur von unter 70°C, bevorzugt 50°C, aufweist. Unmittelbar anschließend an den Austritt des Profils 2 aus der Kühl- und Kalibriervorrichtung 5 werden die Oberflächenschicht 53,54 durch die Heizvorrichtung 51 soweit erhitzt, daß die Oberfläche dieser Oberflächenschicht 53,54 aufschmilzt. Dazu werden diese Oberflächenschichten 53,54 auf eine Temperatur von über 150°C, bevorzugt zwischen 150°C und 180°C, erhitzt. Die genaue Temperatur auf die dieser Kunststoff zu erhitzen ist, ist nicht nur von den unterschiedlich eingesetzten Kunststoffmaterialien, sondern auch von den in diesen Kunststoffmaterialien enthaltenen Zusätzen abhängig, sodaß eine exakte Verfahrenstemperatur im vorhinein nicht angegeben werden kann. Wesentlich ist jedoch, daß das Kunststoffmaterial im Bereich dieser Oberflächenschicht soweit erhitzt wird, daß es aufschmilzt und sich somit in Art eines Schweißvorganges mit dem unmittelbar an die Heizvorrichtung 51 mittels der Düse 15 aufgebrachten Kunststoff zur Herstellung der Schutzschicht 55 bzw. Vorrichtung 59 verbinden, insbesondere verschweißen kann. Im Anschluß an die Düse 15, mit der über einen Düsenspalt 18 die Schutzschicht 55 bzw. die Vorrichtung 59 hergestellt wird, ist eine Abzugsvorrichtung 6 vorgesehen, die bevorzugt durch Raupenabzüge 7 gebildet ist. Um eine exakte Maßhaltigkeit der Schutzschicht 55 bzw. der Vorrichtung 59 sicherzustellen, kann das Profil 2 zwischen der Düse 15 und dem Kaliber 24, wie am besten aus Fig.15 zu ersehen ist, der Höhe und der Seite nach geführt sein.

Um eine Zerstörung bzw. unerwünschte Verformung der Schutzschicht 55 bzw. der Vorrichtung 59, falls diese auf der Distanz zwischen der Düse 15 und der Abzugsvorrichtung 6 nicht entsprechend abkühlen, zu vermeiden, ist es vorteilhaft, wenn diese an Seitenflächen angeordnet sind, an welchen die Raupenabzüge 7 nicht zur Anlage kommen. Für den Fall, daß die Schutzschicht 55 bzw. Vorrichtung 59 jedoch auf dieser Seitenfläche angeordnet sein müssen, so ist es vorteilhaft, wenn die Kettenglieder der Raupenabzüge 7 mit Ausnehmungen versehen sind, um eine unerwünschte Verformung insbesondere der Dichtlippen zu verhindern.

Das Grundmaterial der Profile 2 besteht durchwegs aus einem Material, das nach endgültiger Abkühlung in den gewünschten Einsatzbereich bei Temperaturen von ca. -30° C bis +80° C hart und formstabil bleibt. Das Grundmaterial für diese Schutzschichten 55, 65 bzw. Abdeckvorrichtungen 66, die aus Kunststoffschichten 70 gebildet sein, können besteht aus einem dem Grundmaterial des Profils 2 entsprechenden bzw. ähnlichem Polyvenylchlorid (PVC) oder auch einem hochwertigeren Polyvenylchlorid. Die dafür eingesetzten Materialien können auch eine höhere Beständigkeit gegenüber UV-Strahlung aufweisen, es ist aber ebenso möglich, als Material Acryl oder jede andere Art von Thermoplasten einzusetzen.

Diese Schutzschichten 55,65 und die Abdeckvorrichtungen 66 bzw. Kunststoffschichten 70, die diese Schichten bzw. Vorrichtungen bilden, weisen meist einen Elastizitätsmodul auf, der im wesentlichen dem Elastizitätsmodul des Grundprofiles entspricht. Bei diesen Schichten handelt es sich daher um harte Schichten, die auch entsprechend widerstandsfähig gegen Verformungen sind.

Selbstverständlich ist es aber auch gerade bei jenen Kunststoffschichten, bzw. Abdeckvorrichtungen und Schutzschichten zum Verschließen der Vertiefungen 60 bis 64 möglich, daß diese einen geringeren Elastizitätsmodul aufweisen, als das Grundmaterial des Profiles 2. In jedem Fall wird jedoch in bevorzugter Weise dieses Material einen Elastizitätsmodul aufweisen, der noch keine plastische bzw. elastische Verformung im zum Einsatz derartiger Profile 2 vorgesehenen Temperaturbereich erlaubt.

Es ist aber bei jenen Schutzschichten bzw. Abdeckvorrichtungen mit welchen Vertiefungen 60 bis 64 verschlossen sind, auch möglich, diese mit einem Elastizitätsmodul der erheblich höher ist, als der des Profils 2 auszustatten, sodaß diese Schutzschichten, die die Vertiefungen 60 bis 64 verschließen, mit einem Messer einfach herausgeschnitten werden können, falls in diese Vertiefungen 60 bis 64 ein weiterer Bestandteil beispielsweise eine Dichtung oder eine Anschlagleiste oder ein weiterer Profilteil eingesetzt werden soll.

Selbstverständlich kann das Profil und bzw. oder die Vorrichtung eine vom Verfahren unabhängige eigenständige erfindungsgemäße Lösung bilden.

## Patentansprüche

1. Verfahren zum Herstellen von aus Kunststoffextrudaten geformten formstabilen Profilen, insbesondere Fensterprofilen, mit darauf angeordneten Abdeckelemente wie Schutzschichten zum Abdecken von Profilteilen und/oder insbesondere einen höheren E-Modul aufweisenden, elastisch verformbaren Dichtungs- und /oder Dämpfungselementen, bei welchem das Profil extrudiert und im gleichen Arbeitsgang die Schutzschicht und/oder das Dicht- bzw. Dämpfungselement auf dieses Profil aufextrudiert wird, dadurch gekennzeichnet, daß das Profil (2) nach dem Verlassen der Düse (4) kalibriert und soweit abgekühlt wird, daß es formstabil ist, worauf ein Oberflächenbereich des Profils (2) in einem Bereich, in dem die Schutzschicht oder das Dicht- und/oder Dämpfungselement (19,55,59,65) aufgebracht wird, erhitzt und zumindest in einen teigigen Zustand versetzt wird, wonach die Kunststoffschmelze für die Schutzschicht oder das Dicht- bzw. Dämpfungselement (19,55,59,65) auf den erhitzten Bereich aufextrudiert wird und danach das extrudierte Profil (2) von einer Abzugsvorrichtung (6) erfaßt wird.

2. Verfahren nach Anspruch 1, dadurch gekennzeichnet, daß das Profil (2) beim Austritt aus der Kalibrier- bzw. Kühlstrecke und/oder vor dem Eintritt in die Abzugsvorrichtung (6) der Seite und/oder der Höhe nach geführt ist.

3. Verfahren nach Anspruch 1 oder 2, dadurch gekennzeichnet, daß das Profil (2) zumindest in jenem Bereich, in welchem die Schutzschicht und/oder das Dicht- bzw. Dämpfungselement (19,55,59,65) aufgeschweißt wird, so stark erhitzt wird, daß es im Oberflächenbereich aufschmilzt.

4. Verfahren nach einem oder mehreren der Ansprüche 1 bis 3, dadurch gekennzeichnet, daß die Temperatur des Profils (2) vor dem Eintritt in den Heizbereich ermittelt und in Abhängigkeit davon die Wärmemenge zum Erhitzen des Profils (2) in jenem Bereich, in welchem die Schutzschicht und/oder das Dicht- bzw. Dämpfungselement (19,55,59,65) aufgetragen wird, festgelegt wird.

5. Verfahren nach einem oder mehreren der Ansprüche 1 bis 4, dadurch gekennzeichnet, daß die Temperatur des Kunststoffs in dem erhitzten Oberflächenbereich ermittelt wird und insbesondere in Abhängigkeit davon die Wärmezufuhr zum Erhitzen des Profils (2) bei einem Überschreiten einer vordefinierten Soll-Temperatur verringert und bei einem Unterschreiten erhöht wird.

6. Verfahren nach einem oder mehreren der Ansprüche 1 bis 5, dadurch gekennzeichnet, daß die Temperatur des Profils (2) vor dem Heizbereich und die Temperatur des Oberflächenbereiches des Profils (2) im erhitzten Bereich nach der Wärmeeinwirkung erfaßt und in Abhängigkeit von den beiden ermittelten Temperaturen die zugeführte Wärmeenergie gesteuert wird.

7. Verfahren nach einem oder mehreren der Ansprüche 1 bis 6, dadurch gekennzeichnet, daß das kalibrierte Profil (2) auf eine Temperatur von unter 70°C abgekühlt und danach ein Oberflächenbereich des Profils (2) in dem die Schutzschicht und/oder Dicht- bzw. Dämpfungselement (19,55,59,65) aufnehmenden Bereich auf zumindest 150°C erhitzt wird, worauf ein die Schutzschicht und/oder Dicht- bzw. Dämpfungselement (19,55,59,65) bildender Kunststoff aufextrudiert wird.

8. Verfahren nach einem oder mehreren der Ansprüche 1 bis 7, dadurch gekennzeichnet, daß die plastifizierte Kunststoffschmelze zur Bildung der Schutzschicht und/oder des Dicht- bzw. Dämpfungselementes (19,55,59,65) mit dem erweichten Kunststoff des Oberflächenbereiches des Profils (2) verschweißt wird.

9. Verfahren nach einem oder mehreren der Ansprüche 1 bis 8, dadurch gekennzeichnet, daß das kalibrierte Profil (2) bevorzugt vor und nach dem Aufbringen des die Schutzschicht und/oder des Dicht- bzw. Dämpfungselementes (19,55,59,65) bildenden Kunststoffs der Seite und/oder der Höhe nach geführt ist.

10. Verfahren nach einem oder mehreren der Ansprüche 1 bis 9, dadurch gekennzeichnet, daß das Profil (2) von der Abzugsvorrichtung (6) in den der Schutzschicht und/oder dem Dicht- bzw. Dämpfungselement (19,55,59,65) benachbarten Bereichen erfaßt wird.

11. Verfahren nach einem oder mehreren der Ansprüche 1 bis 10, dadurch gekennzeichnet, daß die Schutzschicht und/oder das Dicht- bzw. Dämpfungselement (19,55,59,65) im Bereich der Abzugsvorrichtung (6) gekühlt wird.

12. Verfahren nach einem oder mehreren der Ansprüche 1 bis 11, dadurch gekennzeichnet, daß die Schutzschicht zwischen zwei einander gegenüberliegenden Seitenkanten (67) einer nutförmigen Vertiefung (63) eingebracht und mit diesen verbunden wird.

13. Verfahren nach einem oder mehreren der Ansprüche 1 bis 12, dadurch gekennzeichnet, daß die Schutzschicht (65) die beiden einander zugewandten Seitenkanten (67) der nutförmigen Vertiefung (63) im Bereich der Außenflächen (68) überragt.

14. Verfahren nach einem oder mehreren der Ansprüche 1 bis 13, dadurch gekennzeichnet, daß das Abdeckelement (66) zum Abdecken der nutförmigen Vertiefung (60) diese überspannend auf die Außenflächen (69) aufextrudiert wird.

15. Profil aus formstabilem Kunststoff, insbesondere Fensterprofil, mit einer aus elastisch verformbarem Kunststoff bestehenden Schutzschicht und/oder einem Dicht- bzw. Dämpfungselement nach dem Verfahren, gemäß den Patentansprüchen 1 bis 14, dadurch gekennzeichnet, daß die Schutzschicht und/oder das Dicht- bzw. Dämpfungselement (19,55,59,65) auf einen kalibrierten Oberflächenbereich des Profils (2) auf- bzw. zwischen diesen eingeschweißt ist.

16. Profil nach Anspruch 15, dadurch gekennzeichnet, daß die Schutzschicht und/oder das Dicht- bzw. Dämpfungselement (19,55,59,65) vollflächig auf dem Oberflächenbereich des Profils (2) aufgeschweißt ist.

17. Profil nach Anspruch 15 oder 16, dadurch gekennzeichnet, daß die Schutzschicht und/oder das Dicht- bzw. Dämpfungselement (19,55,59,65) auf dem aufgeweichten Oberflächenbereich des Profils (2) aufextrudiert ist.

18. Profil nach Anspruch 16 oder 17, dadurch gekennzeichnet, daß die Schutzschicht und/oder das Dicht- bzw. Dämpfungselement (19,55,59,65) mehrere in Umfangsrichtung des Profils (2) voneinander distanzierte und unabhängig voneinander angeordnete Schutzschichten und/oder Dicht- bzw. Dämpfungselemente-( (19,55,59,65) aufweist.

19. Anlage zur Herstellung von Profilen, insbesondere Fensterprofilen, aus formstabilem Kunststoff, mit auf diesen angeordneten Schutzschichten und/oder insbesondere einen höheren Elastizitätsmodul aufweisenden, elastisch verformbaren Dicht- bzw. Dämpfungselemente nach dem Verfahren, gemäß den Ansprüchen 1 bis 14, mit einer Extrusionsvorrichtung, einer dieser nachgeschalteten Düse zur Formung eines gewünschten Profils, einer der Düse nachgeordneten Kalibrier- und Kühlvorrichtung für das Profil und einer dieser nachgeordneten Abzugvorrichtung, insbesondere einem Raupenabzug, dadurch gekennzeichnet, daß zwischen der Kühl- und Kalibriervorrichtung (5) und dem Raupenabzug (7) zumindest eine weitere Düse (15) angeordnet ist, an der das Profil (2) anliegend vorbeigeführt ist und die mit einem Düsenspalt (18) zur Herstellung einer als Schutzschicht (55,65) dienenden Beschichtung und eines Dicht- bzw. Dämpfungselementes (19,55,59,65) versehen ist, der mit einem Ausgang (16) einer weiteren Extrusionsvorrichtung (17) verbunden ist.

20. Anlage nach Anspruch 19, dadurch gekennzeichnet, daß in der Abzugsvorrichtung (6), insbesondere im Raupenabzug (7), Ausnehmungen (26) zur Aufnahme der Schutzschicht und/oder des Dicht- bzw. Dämpfungselementes (19,55,59,65) vorgesehen sind.

21. Anlage nach Anspruch 19 oder 20, dadurch gekennzeichnet, daß die Schutzschicht und/oder das Dicht- bzw. Dämpfungselement (19,55,59,65) auf geneigt oder versetzt zu Transportflächen der Raupen verlaufenden Flächen des Profils (2) angeordnet sind.

22. Anlage nach einem oder mehreren der Ansprüche 19 bis 21, dadurch gekennzeichnet, daß zwischen der Kühl- und Kalibriervorrichtung (5) und der Düse (15) der weiteren Extrusionsvorrichtung (17) eine einem Oberflächenbereich zugeordnete Heizvorrichtung (9,51) angeordnet ist.

23. Anlage nach einem oder mehreren der Ansprüche 19 bis 22, dadurch gekennzeichnet, daß der Oberflächenbereich eine Breite (12) aufweist, die in etwa einer Breite der aufgeschweißten Schutzschicht und/oder dem Dicht- bzw. Dämpfungselement (19,55,59,65) entspricht.

24. Anlage nach einem oder mehreren der Ansprüche 19 bis 23, dadurch gekennzeichnet, daß der Düse (15) der weiteren Extrusionsvorrichtung (17) eine Kalibriervorrichtung und gegebenenfalls eine Kühlvorrichtung nachgeordnet ist.

25. Anlage nach einem oder mehreren der Ansprüche 19 bis 24, dadurch gekennzeichnet, daß die Düse (4) zumindest zwei in Umfangrichtung des Profils (2) voneinander getrennte und distanziert angeordnete Düsenspalte (18) aufweist.

## Claims

1. A method for the production of dimensionally stable profiles, in particular window profiles, formed from plastics extrudates, and being provided thereon with covering elements such as protective layers in order to cover parts of the profile and /or in particular elastically deformable sealing and/or damping elements having a higher modulus of elasticity than said profiles, wherein the profile is formed by extrusion, and the protective layer and /or the sealing or respectively damping element is extruded thereon in the same operation, characterized in that the profile (2) is calibrated upon its emergence from the nozzle (4) and cooled down to such an extent so as to render it dimensionally stable whereupon the surface region of the profile (2) is heated and at least brought to a softened state in a region to which the protective layer or the sealing and/or damping element (19, 55, 59, 65) is applied, whereupon the plastic melt for the protective layer or the sealing or respectively damping element (19,55,59,65) is then extruded onto the heated region and whereupon the extruded profile (2) is gripped by a take-up device (6).

2. A method according to claim 1, characterized in that the profile (2) is guided vertically and/or laterally upon its emergence from the calibrating or respectively cooling stretch and/or prior to its entry into the take-up device(6).

3. A method according to claim 1 or 2, characterized in that the profile (2) is heated, at least over the region to which the protective layer and/or the sealing or respectively damping element (19, 55, 59, 65) is fused , to an extent to melt said surface region.

4. A method according to any one of claims 1 to 3, characterized in that the temperature of the profile (2) is measured before its entry into the heating region so as to determine, as a function of such measurement, the amount of heat required for heating the profile (2) in the region to which the protective layer and/or the sealing or respectively damping element (19,55,59,65) is applied.

5. A method according to any one of claims 1 to 4, characterized in that the temperature of the plastic material is measured in the heated surface region and, in particular, as a function of such measurement, that the heat supply for heating the profile (2) is reduced if the predetermined temperature is exceeded and increased if short of the predetermined temperature.

6. A method according to any one of claims 1 to 5, characterized in that the temperature of the profile (2) is measured prior to reaching the heating zone and the temperature of the heated surface region of the profile (2) is measured after being heated, and as a function of the two measured temperatures, that the heat supply is controlled.

7. A method according to any one of claims 1 to 6, characterized in that the calibrated profile (2) is cooled to a temperature of less than 70°C, and whereupon the part of of the surface region of the profile (2) to which the protective layer and/or the sealing or respectively damping element (19,55,59,65) is applied, be heated to at least 150°C, whereupon a plastic material for the formation of the protective layer and/or the sealing or respectively damping element (19,55,59,65) is extruded onto the said profile.

8. A method according to any one of claims 1 to 7, characterized in that the plasticized plastics melt for the formation of the protective layer and/or the sealing or respectively damping element (19,55,59, 65) is fused with the softened plastic material of the surface region (2) of the profile.

9. A method according to any one of claims 1 to 8, characterized in that the calibrated profile (2) is guided laterally and/or vertically preferably prior to and after the application of the plastic material forming the protective layer and/or the sealing or respectively damping element (19,55,59,65).

10. A method according to any one of claims 1 to 9, characterized in that the profile (2) is gripped by means of a take-up device (6) at positions adjacent to the protective layer and/or the sealing or respectively damping element (19,55,59,65).

11. A method according to any one of claims 1 to 10, characterized in that the protective layer and/or the sealing or respectively damping element (19, 55, 59, 65) is cooled within the region of the take-up device (6).

12. A method according to any one of claims 1 to 11, characterized in that the protective layer is introduced into a recess (63) between two opposite side edges (67)and connected with the latter.

13. A method according to any one of claims 1 to 12, characterized in that the protective layer (65) projects beyond the two opposite end faces (67) of the recess (63) within the region of the outer faces.

14. A method according to any one of claims 1 to 13, characterized in that the covering element (66) for the recess (60) is extruded onto the outer faces (69) so as to span it.

15. A profile formed from a dimensionally stable plastic material, in particular window profiles, with a protective layer and/or a sealing or respectively damping element constituted of an elastically deformable plastic material according to the method in claims 1 to 14, characterized in that the protective layer and/or the sealing or respectively damping element (19, 55, 59, 65) is fused to a calibrated part of the surface region of the profile (2) or respectively fused between them.

16. A profile according to claim 15, characterized in that the protective layer and/or the sealing or respectively damping element (19, 55,59,65) is fused over the entire surface of the profile (2).

17. A profile according to claim 15 or 16, characterized in that the protective layer and/or the sealing or respectively damping element (19,55,59,65) is extruded onto the softened surface region of the profile (2).

18. A profile according to claim 16 or 17, characterized in that the protective layer and/or the sealing or respectively damping element (19, 55, 59, 65) is constituted of several protective layers and/or sealing or respectively damping elements (19, 55, 59, 65) spaced along the periphery of the profile (2) at a certain distance from each other and arranged independently of one another.

19. A machine for the production of profiles, in particular window profiles, made of dimensionally stable plastic material and being provided thereon with protective layers and/or in particular elastically deformable sealing or respectively damping elements having a higher modulus of elasticity being produced by a method according to claim 1 to 14, with an extrusion device and a nozzle located downstream of this device for formation of the desired profile, a calibrating and cooling device located downstream of said nozzle for calibration and cooling of the profile, and a take-up device downstream of the calibrating and cooling device, in particular a crawler-type take-up, characterized in that there is at least a second nozzle (15) between the cooling and calibrating device (5) and the crawler-type take-up (7) , which is being positioned for contact with the profile (2) as it passes by and which has a nozzle opening (18) for forming a coating serving as protective layer (55, 65) as well as a sealing or respectively damping element (19, 55, 59, 65) which is connected to an opening (16) of a further extrusion device (17).

20. A machine according to claim 19, characterized in that recesses (26) for receiving the protective layer and/or the sealing or respectively damping element (19, 55, 59, 65) are provided in the take-up device (6) and in particular in the crawler-type take-up (7).

21. A machine according to claim 19 or 20, characterized in that the protective layer and/or the sealing or respectively damping element (19, 55, 59, 65) is arranged upon the faces of the profile (2) which are inclined or offset with respect to the transport faces of the crawler tracks.

22. A machine according to claim 19 to 21, characterized in that a heating device associated with a surface region is arranged between the cooling and calibrating device (5) and the nozzle (15) of a further extrusion device (17).

23. A machine according to any one of claims 19 to 22, characterized in that the surface region of the profile has a width (12) corresponding approximately to the width of the protective layer and/or the sealing or respectively damping element (19, 55, 59, 65) which is fused onto it.

24. A machine according to any one of claims 19 to 23, characterized in that the nozzle (15) of the further extrusion device (17) is arranged downstream of the calibrating device and if need be, a cooling device.

25. A machine according to any one of claims 19 to 24, characterized in that the nozzle (4) has at least two nozzle openings (18) spaced peripherally of the profile (2) and separated from one another.

## Revendications

1. Procédé de fabrication de profilés indéformables, notamment pour profilés de fenêtre, en matière synthétique extrudée, les éléments de revêtement étant disposés sur lesdits profilés, comme par exemple des couches protectrices pour le recouvrement des sections profilés et/ou des éléments d'étanchéité et/ou des éléments d'amortissement particulièrement avec un plus haut coefficient d'élasticité que lesdits profilés, un procédé par lequel le profilé est extrudé et en une même opération, la couche protectrice et/ou l'élément d'étanchéité et/ou l'élément d'amortissement est posé par extrusion sur ce profilé, caractérisé en ce que le profilé (2) après avoir sorti de la filière d'extrusion (4) est cannelé et refroidi jusqu'à ce qu'il devienne indéformable, et en ce qu'ensuite une partie de la surface du profilé (2) est chauffée ou au moins mis dans un état amolli dans la zone où est appliquée la couche protectrice ou l'élément d'étanchéité et/ou l'élément d'amortissement (19, 55, 59, 65) et en ce qu'ensuite la matière synthétique en fonte pour la couche protectrice ou l'élément d'étanchéité ou, respectivement, l'élément d'amortissement (19,55,59, 65) est posé par extrusion sur la zone chauffée et par la suite, le profilé extrudé (2) est saisi par un dispositif de tirage (6).

2. Procédé selon la revendication 1, caractérisé en ce que le profilé (2) est guidé verticalement et/ou latéralement après la phase de calibrage et de refroidissement et/ou avant insertion dans le dispositif de tirage (6).

3. Procédé selon la revendication 1 ou 2, caracterisé en ce que le profilé (2) est chauffé, au moins dans la zone de soudage de la couche protectrice et/ou de l'élément d'étanchéité ou, respectivement, de l'élément d'amortissement (19, 55, 59, 65), à une température si élevée que la zone de surfaces est ouvert par fusion.

4. Procédé selon l'une des revendications 1 à 3, caractérisé en ce que la température du profilé (2) est mesurée avant insertion dans la zone de chauffage et en dépendant de cette mesure que la quantité de chaleur pour le chauffement du profilé (2) est déterminée dans la zone où la couche protectrice et l'élément d'étanchéité ou, respectivement, l'élément d'amortissement (19,55, 59, 65) est appliqué.

5. Procédé selon l'une des revendications 1 à 4, caractérisé en ce que la température de la matière synthétique est mesurée dans la zone de surfaces réchauffée et, notamment en dépendant de cette mesure que l'amenée de chaleur pour le réchauffage du profilé (2) est réduite si la température est plus haute que la température prédestinée ou augmentée si la température est plus basse que la température prédestinée.

6. Procédé selon l'une des revendications 1 à 5, caractérisé en ce que la température du profilé (2) est mesurée avant insertion dans la zone de chauffage et en ce que la température de la zone de surfaces du profilé (2) est mesurée dans la zone chauffée après l'effet calorifique et en ce qu'en dépendant de deux températures constatées , l'énergie calorifique introduite est contrôlée.

7. Procédé selon l'une des revendications 1 à 6, caractérisé en ce que le profilé calibré (2) est refroidi à une température au-dessous de 70°C et par la suite, en ce que la zone de surface du profilé (2) dans la zone de la couche protectrice et/ou de l'élément d'étanchéité ou, respectivement, de l'élément d'amortissement (19, 55, 59, 65) est au moins chauffée à 150°C et en ce qu'ensuite la matière synthétique formant la couche de protection et/ou l'élément d'étanchéité ou, respectivement, l'élément d'amortissement (19,55, 59,65) est extrudée sur ledit profilé.

8. Procédé selon l'une des revendications 1 à 7, caractérisé en ce que le bain de matière synthétique plastifiée pour la formation de la couche protectrice et/ou de l'élément d'étanchéité ou, respectivement, de l'élément d'amortissement (19, 55, 59, 65) est soudé avec la matière synthétique ramollie de la zone des surfaces du profilé (2).

9. Procédé selon l'une des revendications 1 à 8, caractérisé en ce qu'il est préférable que le profilé calibré (2) est guidé latéralement et/ou verticalement avant et après l'application de la matière synthétique formant la couche protectrice et/ou l'élément d'étanchéité ou, respectivement, l'élément d'amortissement (19, 55, 59, 65).

10. Procédé selon l'une des revendications 1 à 9, caractérisé en ce que le profilé (2) est saisi par le dispositif de tirage (6) dans les zones adjacent à la couche protectrice et au l'élément d'étanchéité ou, respectivement, au l'élément d'amortissement (19, 55, 59, 65).

11. Procédé selon l'une des revendications 1 à 10, caractérisé en ce que la couche protectrice et/ou l'élément d'étanchéité ou, respectivement, l'élément d'amortissement (19,55,59,65) est refroidi dans la zone du dispositif de tirage (6).

12. Procédé selon l'une des revendications 1 à 11, caractérisé en ce que la couche protectrice est introduite dans une encoche (63) entre deux arêtes opposées (67) et mises en connexion avec eux.

13. Procédé selon l'une des revendications 1 à 12, caractérisé en ce que la couche protectrice (65) dépasse dans la zone des surfaces extérieures (68) les deux arêtes latérales (67) de l'encoche (63) l'une face à l'autre.

14. Procédé selon l'une des revendications, caractérisé en ce que l'élément de revêtement (66) pour le recouvrement de l'encoche (60) est extrudé sur les surfaces extérieures (69) afin de la recouvrir.

15. Profilé en matière sythétique indéformable, notamment pour profilés de fenêtre, avec une couche protectrice se composant d'une matière synthétique apte à la déformarion élastique et/ou d'un élément d'étanchéité ou, respectivement, d'un élément d'amortissement après ledit procédé, selon l'une des revendications 1 à 14, caractérisé en ce que la couche protectrice et/ou l'élément d'étanchéité ou, respectivement, l'élément d'amortissement (19, 55, 59, 65) est soudée sur une zone de surface calibrée du profilé (2) ou, respectivement soudée entre les deux.

16. Profilé selon la revendication 15, caractérisé en ce que la couche protectrice et/ou l'élément d'étanchéité ou, respectivement, l'élément d'amortissement (19, 55, 59, 65) est soudée sur toute la surface de la zone de surface du profilé (2).

17. Profilé selon l'une quelconque des revendications 15 ou 16, caractérisé en ce que la couche protectrice et/ou l'élément d'étanchéité ou, respectivement d'amortissement (19, 55, 59,65) est posé par extrusion sur la zone de surface amollie du profilé (2).

18. Profilé selon l'une quelconque des revendications 16 ou 17, caractérisé en ce que la couche protectrice et/ou l'élément d'étanchéité ou, respectivement, d'amortissement (19, 55, 59, 65) présente dans la direction circonférentielle du profilé (2) plusieurs couches protectrices et/ou des éléments d'étanchéité ou, respectivement, d'amortissement (19, 55, 59, 65), ayant une certaine distance l'une par rapport à l'autre et étant agencées indépendemment l'une de l'autre.

19. Une machine pour la fabrication de profilés, notamment de profilés de fenêtre se composant d'une matière synthétique indéformable, étant disposé dans lesdites profilés des couches protectrices et/ou des éléments d'étanchéité ou, respectivement, d'amortissement apte à la déformation élastique, et/ou, en particulier, montrant un plus haut coefficient d'élasticité que ledit profilé après le procédé, selon l'une des revendications 1 à 14, avec une machine d'extrudage et avec une filière d'extrusion placé en aval de cette machine pour le formage d'un profilé à obtenir, un dispositif de calibrage et de refroidissement pour le profilé placé en aval de la filière d'extrusion et un dispositif de tirage placé en aval de celui-ci, notamment une chenille de tirage, caractérisé en ce qu'il est disposé entre le dispositif de refroidissement et de calibrage (5) et la chenille de tirage (7) au moins une filière d'extrusion additionelle (15)adhérant uniformément au profilé (2) passant et avec un orifice de la filière (18) pour la fabrication d'une couche servant comme couche protectrice (55, 65) et un élément d'étanchéité ou, respectivement, un élément d'amortissement , qui est liée à une sortie (16) d'une autre machine d'extrudage (17).

20. Une machine selon la revendication 19, caractérisé en ce qu'il sont pourvu dans le dispositif de tirage (6), notamment la chenille de tirage (7) des encoches (26) pour recevoir la couche protectrice et/ou l'élément d'étanchéité ou, respectivement d'amortissement (19, 55, 59, 65).

21. Une machine selon l'une quelconque des revendications 19 ou 20, caractérisé en ce que la couche protectrice et/ou l'élément d'étanchéité ou, respectivement, d'amortissement (19, 55, 59, 65) est disposée sur les faces du profilé (2) qui sont inclinées ou déplacées par rapport aux faces de transport des chenilles.

22. Une machine selon l'une des revendications 19 à 21, caractérisé en ce qu'il est disposé entre le dispositif de refroidissement et de calibrage (5) et la filière d'extrusion (15) de la machine d'extrudage (17) additionnelle, un appareil de chauffage (9, 51) associé avec une zone de surface.

23. Une machine selon l'une des revendications 19 à 22, caractérisé en ce que la zone de surface dont la largeur correspond à peu près à la largeur de la couche protectrice soudée et/ou à celle du l'élément d'étanchéité ou, respectivement, d'amortissement (19, 55, 59, 65).

24. Une machine selon l'une des revendications 19 à 23, caractérisé en ce que la filière d'extrusion (15) de la machine d'extrudage additionnelle (17) est suivie par un dispositif de calibrage et s'il y a lieu par un dispositif de refroidissement.

25. Une machine selon l'une des revendications 19 à 24, caractérisé en ce que la filière d'extrusion (4) présente au moins deux orifices de filière (18) dans la direction circonférentielle du profilé (2) étant séparés l'un de l'autre et ayant une certaine distance l'un par rapport à l'autre.
